# EUROPEAN PATENT SPECIFICATION

(11) **EP 4 672 125 B1**
(45) Date of publication and mention of the grant of the patent: **04.11.2026**
(21) Application number: 25170800.4
(22) Date of filing: 27.09.2017
(51) Int. Cl.: G06Q 30/08, G06Q 40/04, G06Q 40/06

(54) **SYSTEM AND METHOD FOR REVERSE SEALED BID AUCTIONS**
SYSTEM UND VERFAHREN FÜR AUKTIONEN MIT UMGEKEHRTEN VERSIEGELTEN ANGEBOTEN
SYSTEME ET PROCEDE POUR VENTES AUX ENCHERES A OFFRES SCELLEES EN SENS INVERSE

(30) Priority: 03.10.2016 US 201662403546 P
(43) Date of publication of application: 31.12.2025
(62) Document number(s) of the earlier application(s) in accordance with Art. 76 EPC: 17858915.6 / 3 520 065
(73) Proprietor: OPERR Technologies, Inc., Flushing, NY 11354 (US)
(72) Inventor: WANG, Kevin Sunlin, 11354 New York (US)
(74) Representative: Bauer, Karel

(56) References cited:
- US-A1- 2014 172 613
- US-A1- 2016 098 788

## Description

### FIELD OF THE INVENTION

The present disclosure relates generally to online auctions, and more particularly, to a system and method for sealed bid reverse online auctions for tangible or intangible goods and/or services that include anything of value (e.g., goods, services, space, financial resources, etc.).

### BACKGROUND

Reverse auctions are auctions in which the roles of buyer and seller are reversed. That is, in traditional auctions, buyers compete to obtain goods/services from a seller by offering increasingly higher prices. In a reverse auction, sellers compete to obtain business from a buyer (i.e., offering to provide the good/service sought by the buyer), and prices typically decrease as the sellers underbid each other. An objective of a reverse auction is to enable a buyer to solicit goods/services from a plurality of seller-bidders in order to minimize the cost of the buyer for the goods/services desired. In other words, the bidder-sellers compete with one another for the buyer's business by offering increasingly lower prices at which they will provide the goods/services. For the buyers, such reverse auctions facilitate access to new suppliers of goods/services.

In sealed bid reverse auctions, the sellers and buyer are not privy to the values of any bids until the auction closes, which helps avoid various problems associated with open reverse auctions, most notably, indecent bidding activities. Unlike open reverse auctions (i.e., where two or three sellers may be sufficient to keep lowering the price of the auctioned subject as they try to underbid one another), in sealed bid reverse auctions, the sellers are unaware of what all other sellers are bidding. Therefore, the sellers will strategically submit bids they feel would be an appropriate amount for providing the desired goods/services without the benefit of knowing what any of the other sellers are bidding for the same goods/services.

A number of deficiencies are present with existing sealed bid reverse online auctions. For example, the uncertainty associated with existing sealed bid reverse auctions may dissuade many sellers from even participating in these types of auctions, since they will not know how their bids compare to the bids of other sellers. Accordingly, existing sealed bid reverse auctions have a problem with attracting a sufficient number of bidders to ensure a buyer's likelihood of obtaining the lowest reasonable price for the requested good/service. Because the bids are sealed, the bidder-sellers have no incentive to resubmit lower bids based on other bids. Another deficiency with existing sealed bid reverse auctions is a fear of the sellers that they may significantly under-bid, then win the reverse auction, and be obligated to provide the auctioned good/service for too low a price.

From a buyer's standpoint, a low number of bids raises the question of whether or not the bids are a reasonable and fair price for the goods/services. Buyers desire a larger number of bidder-sellers, which are likely needed, to increase the probability of obtaining a sufficiently low, fair and reasonable bid. A buyer wants to obtain the auctioned subject at a low price, but also generally desires good quality of service. Therefore, a buyer does not want a winning seller who experiences "winner's remorse" for fear that the quality of the goods/services, and/or the safe delivery or provision thereof, will be inadequate if the winning seller realizes that he/she bid significantly below market value. While all auctions provide inherent risk, these practical realities can diminish participation in existing sealed bid reverse auction, and by extension, their likelihood of success.

In an open reverse auction, since bidders are able to view other bid amounts, they may engage in illegitimate or unfair bidding practices. For example, once a buyer submits an on-line reverse auction request for an auctioned subject with the expectation of obtaining the auction subject for a lower price, two or more colluding bidders may unfairly or illegally preserve a high bid. Although a live reverse auction on-site does not allow a bidder to withdraw a bid, an open online reverse auction may allow bidders to withdraw bids at any time as a general or routine practice. Thus, two colluding people who place lower bids withdraw, allowing a third colluding bidder to win the reverse auction at a higher price, forcing the buyer to pay the artificially elevated price. Current on-line reverse auctions offer no effective solutions for this specific on-line or internet-centric auction problem.

In order to combat this technological problem, the present invention overcomes these deficiencies by offering an online reverse sealed bid auction platform that offers a fair bidding process. Such an improved system and method encourages more present and future participation in sealed bid reverse online auctions, and provides consumers with the ability to obtain goods and/or services at the most desirable possible prices through a fair and reasonable process.

US2016/098788 describes a computer system for sealed bidding in online actions, and addresses inherent flaws of the sealed-bid second-price scheme. US2014/172613 describes a computer implementation of a hybrid auction combining elements of a clock auction and a sealed-bid auction.

### SUMMARY OF THE INVENTION

This summary is not intended to identify or point to essential features or limit the scope of the subject matter claimed herein. The present invention relates generally to methods and systems for conducting a sealed bid online reverse auction for goods and/or services and utilizes alternate classifications for bidders such that at least one category of bidder commits to pay a fee to participate in the auction, where the fee may be allocated in various ways. The system and method also preferably uses the values of particular bids (e.g., the winning bid and a designated bid) to compute a final recalculated winning bid amount for the auctioned goods/services. Generally, the methods and systems for remotely conducting a sealed bid online reverse auction in accordance with the invention have at least the following objectives:

To mitigate the risks to a buyer and a bidder in an online sealed bid reverse auction, or to help optimize the interests of the buyer or the bidder in such auctions.

To offer options for the buyer, bidders, or third-parties to customize the auction through various predetermined rules, settings, values, etc.

To provide incentives for both bidder and buyer participation by reducing uncertainty, encouraging lower bids, reducing "winner's remorse", increasing the likelihood of a fair and reasonable final bid amount, and allocating a price-protection fee paid by the winning bidder for distribution in accordance with one or more predetermined rules.

To establish multiple bidding categories for bidders associated with different predetermined rules and settings, and identify a winning bid from bids in the multiple categories according to the different predetermined rules and settings.

To provide bidder-sellers with the option to select a bidding category with an associated commitment to pay a price-protection fee related to the bidder-seller's bid, and, if the bidder-seller's bid is a winning bid, to potentially receive an upward adjustment of the winning bid.

To provide a reverse auction in which a price-protection fee paid by the bidder-sellers is allocated in various ways to one or more parties based on predetermined rules and settings.

To establish a bidding category in which a recalculated winning bid amount (i.e., recalculated price, recalculated amount, recalculated final price, final recalculated amount, etc.), is computed in accordance with a formula based on the value of the winning bid, a price-protection fee associated therewith, a value of a designated bid, and a predetermined percentage of the difference between the value of winning bid and the value of the designated bid (e.g., next-lowest, second lowest, third lowest, fourth lowest, etc.).

To enable a bidder to withdraw a bid before a close of the auction and submit a new sealed bid after withdrawing his/her bid before the close of the auction, and to enable a plurality of bidders is enabled to submit new sealed bids within a certain time frame when the plurality of bidders submitted identical bids identified as a winning bid amount.

To establish a ranking, before a start of the auction, by a buyer, the system, a third-party, or by default, corresponding to which of a plurality of sealed bids received will be selected as the winning bid.

To provide an online reverse auction utilizing an open (i.e., visible) or hidden (i.e., closed or not visible) reserve price as determined by the buyer as the most the buyer is willing to provide for the auction subject.

To identify a single bid as a winning bid, and utilize a reserve price established by a buyer to compute a recalculated winning bid amount.

To enable the auction to be cancelled, provide a buyer with an option to buy the auction subject for an amount above the reserve price, or provide a winning bidder with an option to sell an auction subject at a reserve price pre-set by the buyer if the submitted bids all exceed the reserve price.

In one aspect of the invention, a computer-implemented system for conducting a sealed bid online reverse auction is provided, which includes a computing system having one or more processors configured to provide an online platform for remotely conducting a sealed bid online reverse auction, a buyer computing device, and at least one bidder computing device. The buyer computing device and the at least one bidder computing device are configured to communicate with the computing system over a network. The system further includes one or more non-transitory computer readable program storage medium capable of storing instructions to instruct the processors to perform the auction in accordance with a set of predetermined rules. The one or more processors are configured to receive, from the buyer computing device, an auction request for an auction subject in the auction, and receive, from the bidder computing device, one or more sealed bids each specifying a bid amount for the auction subject. At least one of the sealed bids is a bid associated with a commitment to pay a price-protection fee.

The processors are further configured to assign an anonymous identifier to each of the sealed bids automatically, and to transmit, during the auction, to one or more bidder computing devices, a first representation of the auction including one or more of the anonymous identifiers. The first representation does not include the bid amount, and the bidder computing device displays at least a portion of information related to the first representation.

The processors are also configured to determine a winning bid from the received sealed bids, and, upon the winning bid being associated with the commitment to pay the price-protection fee: apply the set of predetermined rules to an amount of the winning bid to calculate the price-protection fee; determine a designated bid relative to the winning bid; compute a difference between the amount of the winning bid and an amount of the designated bid; apply the set of predetermined rules to the difference to calculate an adjustment amount; compute, based on a closing of the auction and the winning bid being associated with the commitment, a recalculated winning bid amount based on a formula applying at least one of the adjustment amount or the price-protection fee to the amount of the winning bid; transmit, after the closing of the auction, to at least one bidder computing device, a second representation of the auction, wherein the second representation includes at least the recalculated winning bid amount associated with the winning bid corresponding to at least one of the anonymous identifiers, wherein the bidder computing device displays at least a portion of information related to the second representation; and allocate at least a portion of the price-protection fee for distribution in accordance with the set of predetermined rules.

In another aspect of the invention, a computer-implemented method for conducting a sealed bid online reverse auction is provided. The method includes receiving, from a remote buyer computing device, an auction request for an auction subject in a sealed bid online reverse auction; and receiving, from at least one remote bidder computing device, one or more sealed bids specifying a bid amount for the auction subject. At least one of the sealed bids is a bid associated with a commitment to pay a price-protection fee percentage of the bid amount in accordance with a set of predetermined rules. The remote buyer computing device and the remote bidder computing device is configured to communicate over a network with a computing system having one or more processors. The method further includes assigning an anonymous identifier to each of the sealed bids automatically; transmitting, during the auction, to one or more of the remote bidder computing device, a first representation of the auction including one or more of the anonymous identifiers, but not including the bid amount. The bidder computing device displays at least a portion of information related to the first representation.

The method also includes determining, by the processors, a winning bid from the sealed bids, the winning bid having a winning bid amount according to the set of predetermined rules, wherein upon the winning bid being associated with the commitment to pay the price-protection fee percentage: applying the set of predetermined rules to the winning bid amount to compute a price-protection fee amount; determining a designated bid relative to the winning bid according to the set of predetermined rules; computing a difference between the winning bid amount and an amount of the designated bid; applying the set of predetermined rules to the difference to compute an adjustment amount; computing a final winning bid amount based on a formula applying at least one of the adjustment amount or the price-protection fee amount to the winning bid amount; and transmitting, after the closing of the auction, a second representation including the final winning bid amount associated with the winning bid corresponding to at least one of the anonymous identifiers to at least one remote bidder computing device for display of at least a portion of information related to the second representation.

Other objects, features, and characteristics of the present invention, as well as the methods of operation and functions of the related structural elements, and the combination of parts and economies of development and manufacture, will become more apparent upon consideration of the detailed description below with reference to the accompanying drawings, all of which form a part of this specification.

### BRIEF DESCRIPTION OF THE DRAWINGS

A further understanding of the present invention can be obtained by reference to a preferred embodiment set forth in the illustrations of the accompanying drawings. The drawings are not intended to limit the scope of this invention, which is set forth with particularity in the claims as appended or as subsequently amended, but merely to clarify and exemplify the invention. Accordingly, a more complete appreciation of the present invention and many of the attendant aspects thereof may be readily obtained as the same becomes better understood by reference to the following detailed description when considered in conjunction with the accompanying drawings, where:
FIG. 1A shows a diagram of an example system for providing a sealed bid reverse online auction according to an exemplary embodiment of the invention;
FIG. 1B illustrates a database according to an exemplary embodiment of the invention;
FIG. 2 illustrates a data record for a sealed bid according to an exemplary embodiment of the invention;
FIG. 3 depicts a computing device for use by either a buyer or a bidder according to an exemplary embodiment of the invention;
FIG. 4 depicts an alternative computing device for use by either a buyer or a bidder according to an exemplary embodiment of the invention;
FIG. 5A is a flowchart illustrating a bidding process from the bidder's side, in accordance with an exemplary embodiment of the invention;
FIG. 5B is a flowchart illustrating a continuation of the bidding process from the bidder's side shown in FIG. 5A;
FIG. 5C is a flowchart illustrating a process of distribution of a price-protection fee, in accordance with an exemplary embodiment of the invention;
FIG. 6A is a flowchart illustrating an auction process from the buyer's side, in accordance with an exemplary embodiment of the invention;
FIG. 6B is a flowchart illustrating a continuation of the auction process from the buyer's side shown in FIG. 6A;
FIG. 6C is a flowchart illustrating a continuation of the auction process from the buyer's side shown in FIG. 6B; and
FIG. 7 is a flowchart illustrating a process of determining the winning bidder when there are more than one identical lowest winning bid prices in accordance with an exemplary embodiment of the invention.

### DETAILED DESCRIPTION OF THE INVENTION

As required, a detailed illustrative embodiment of the present invention is disclosed herein and specific embodiments that may be practiced are shown by way of illustration and explanation. The present disclosure is not intended to be limited to the specific terminology selected, and it will be understood that each specific element includes all technical equivalents which operate in a similar manner. However, techniques, methods, systems, and operating structures in accordance with the invention may be embodied in a wide variety of forms and modes, some of which may be quite different from those in the disclosed embodiment. Consequently, the specific structural, functional and step-by-step details disclosed herein are merely representative, yet in that regard, they are deemed to afford the best embodiment for purposes of disclosure and to provide a basis for the claims herein which define the scope of the present invention. The embodiments herein are described in sufficient detail to enable those skilled in the art to practice the embodiments, and it is to be understood that logical, mechanical, and other changes may be made without departing from the scope of the embodiments. The following detailed description is therefore not to be taken in a limiting sense.

Exemplary embodiments of the invention provide a sealed bid, buyer-held reverse online auction for a buyer and one or more bidders (i.e., sellers, bidder-sellers, etc.) in which the bidders compete for the buyer's business using a sustainably balanced system and method by which the buyer can acquire goods/services at a fair rate while allowing bidder-sellers to collect fair compensation for their goods/services. Generally, a buyer may include any individual, customer, entity or group thereof seeking to obtain goods/services temporarily or permanently. Accordingly, the system collects a "price-protection fee" (also referred to herein as a "protection fee," "participation fee," or "fee") from a winning bidder who opted to participate in a presented "price-protection policy," which functions as consideration for being allowed to participate in an auction, and which gives each seller the option to protect himself/herself from, for example, significantly undervaluing his/her goods/services. The potential for a winning bidder to collect more than his/her bid price results from a recalculation governed by preset rules which use the value of and difference between the winning bid and a designated bid (e.g., a next-lowest bid, third lowest, fourth lowest, etc.), and helps mitigate problems otherwise associated with "winner's remorse" or "winner's curse." In essence, the bidder who commits to pay the fee may potentially enjoy the benefits associated therewith (i.e., an increase of their bid by a percentage of the difference between their bid and the next-lowest bid, a return of all or a portion of the fee, etc.). The invention can mitigate risk and help balance buyer/bidder interests. Alternatively, the system can be configured to help optimize the buyer or bidder interests.

In the sealed bid, reverse online auctions contemplated herein, the goods/services which the buyer ultimately seeks to retain or acquire can involve the permanent or temporary transfer of ownership or possession rights, and/or the transfer of goods and/or the provision of services. Possession rights, which relate to the control a person exercises over an auctioned subject, can be transferred from one party to another without transferring actual ownership. The transfer of possession rights requires an intention of one party to possess (e.g., temporarily) a property in exchange for monetary value.

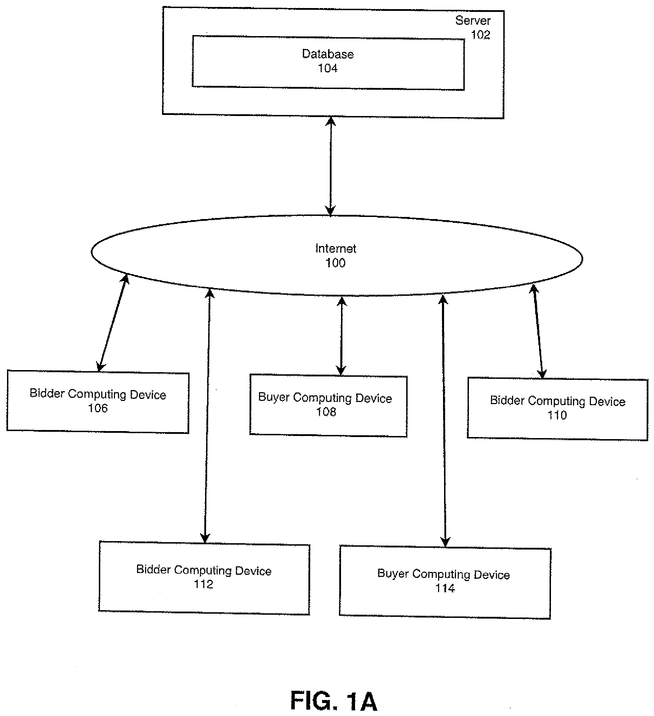

Turning now to FIG. 1A, illustrated is a diagram of an example system for providing a sealed bid reverse online auction according to an exemplary embodiment of the invention. As shown, server 102 is in communication with at least one of a plurality of buyers at remote buyer computing device 108/114 and at least one of a plurality of registered bidders at remote bidder computing device 106/110/112 through a communication network (e.g., Internet 100). Server 102 is preferably configured to receive a reverse auction request for an auctioned subject from buyer computing devices 108/114 and store it in one or more databases 104, which may include a unified database, a remote data center, a cloud-based data storage medium, a portable database, a relational database, or the like. Each reverse auction request received preferably includes at least a description of the auctioned subject and a time duration for the reverse auction input by the buyer into buyer computing device 108/114. The reverse auction request can also include a start price (start auction price) and/or a reserve price.

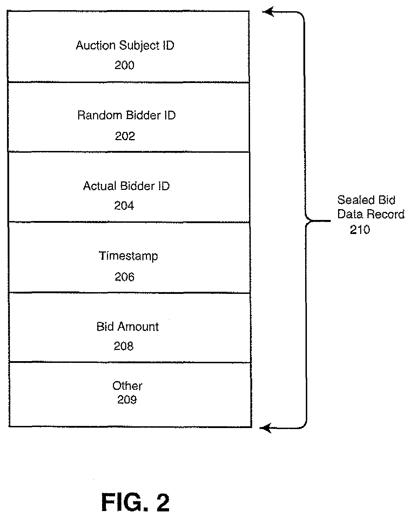

Server 102 is preferably configured to conduct a reverse auction based on the auction request of the buyer with a plurality of registered bidder-sellers using remote bidder computing devices 106/110/112. As shown in FIG. 2, at least one sealed bid may be input into bidder computing device 106/110/112 during the time duration or timeframe of the reverse auction, which is then communicated to server 102. The sealed bid can include, for example, auction ID or auction subject ID 200, bid amount 208 for the auctioned subject, random bidder ID 202, for example, randomly assigned by server 102 to each of the sealed bids received through bidder computing devices 106/110/112 during the auction, and data record 210 for each of the sealed bids stored in database 104 on server 102. Sealed bid data record 210 may contain at least auction ID or auction subject ID 200, random bidder ID 202, actual bidder ID 204, timestamp 206, bid amount 208, and other pertinent information 209 relating to the bidder. A system computing device in operative communication with server 102, at least one of a plurality of registered buyers, and at least one of a plurality of registered bidder-sellers through server 102 via a communication network (e.g., Internet 100) preferably determines the winning bid at the end of the auction (i.e., at the close of the auction) in accordance with data record 210 received for each of sealed bids 200.

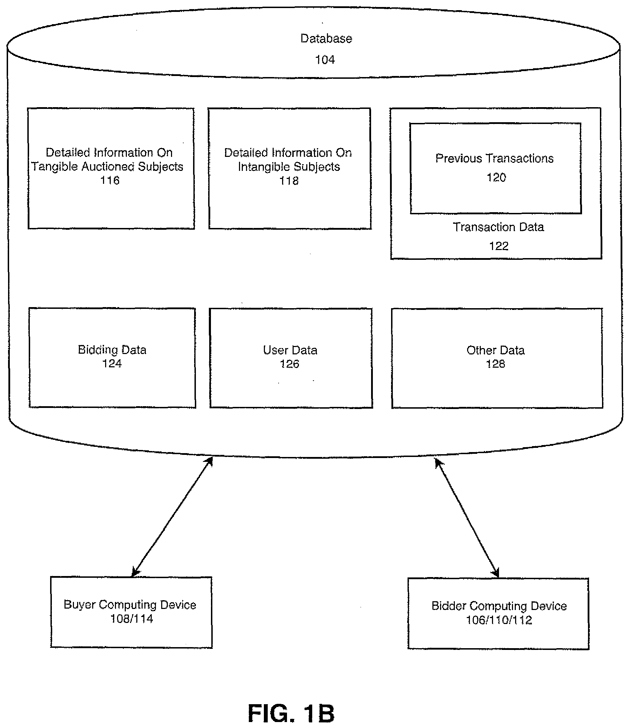

The buyers and bidders discussed herein who use the buyer and bidding computing devices can include various types of users, such as, for example, individuals, business entities, not-for-profit organizations, or government agents. The systems disclosed herein integrate a means for maintaining one or more of database 104 to store buyer and bidder information without disclosing real identifications or information about auctioned tangible and/or intangible auctioned subjects. By way of example, as shown in FIG. 1B, database 104 preferably contains, stores and dynamically updates data related to the bidding process, including but not limited to, detailed information regarding tangible 116 or intangible 118 auctioned subjects, transaction data 122 (which may also contain data pertaining to previous transactions 120), bidding data 124 (e.g., bid history, prices, timestamps, etc.), user data 126 (e.g., user profiles, financial information, auction history, sealed winning bidder ID information, etc.), and other data 128 (i.e., feedback from the buyer following receipt of the good/service from the bidder to the buyer). Similarly, database 104 can maintain and dynamically update records on each buyer, including, for example, the buyer's ability to pay the amount owed for the good/service provided by the bidder, along with any applicable shipping costs, insurance, etc.

In a preferred embodiment, certain information about the auction subject and the bidders is kept hidden from the bidders during the reverse auction. Database 104 through, for example, a communication network and/or server-side computing device may be connected to and queried by buyers from remote buyer computing devices 108/114 and by bidders from remote bidder computing devices 106/110/112 to obtain relevant information such as references about historical transactions and prices of goods and services relating to the auctioned subjects. Historical transactions within database 104 may provide, for example, a price reference relating to at least one of the plurality of registered bidders or the plurality of registered buyers about at least one previously auctioned subject of value in case the bidders lack sufficient knowledge and experience about the services or products they intend to offer for sale as the auction subject. With respect to buyers, access to such historical transactions may be helpful for listing reserve prices within the reverse auctions. Database 104 may be queried for searches by at least one of the plurality of registered bidders or the plurality of registered buyers about at least one previously auctioned subject of value without disclosing the actual bidder ID of the winning bidder. Each of the sealed bids may be securely stored on server 102 during the time duration of the reverse auction. At the end of the auction, bid amounts and timestamps can be displayed to the plurality of bidders without the actual bidder IDs being displayed.

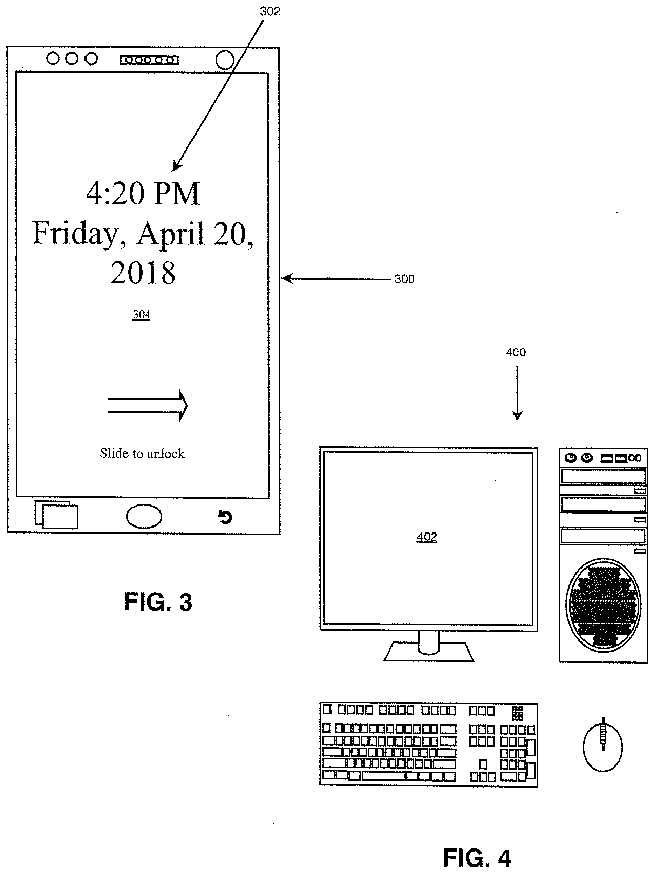

As shown in FIG. 3, bidder computing devices 106/110/112 or buyer computing devices 108/114 may be a user's smartphone or other "smart" handheld user device 300, and may have internal clock mechanism providing time and/or date information 302 that automatically identifies and communicates to server 102 timestamp data 206 for each sealed bid to determine and record the sequence of the submitted bids. Each user device 300 may also have display 304, and may be any computing device known in the art. By way of example, a smartphone, tablet, personal computer or any other computing device may be utilized. Alternatively, as shown in FIG. 4, each bidder computing devices 106/110/112 or buyer computing devices 108/114 may be user device 400 such as a personal computer having display 402. User device 400 may be any computing device known in the art, such as, for example, a personal desktop computer, a laptop, a tablet, a smart TV, a gaming system, in-vehicle computer or navigation system, or any other computing device.

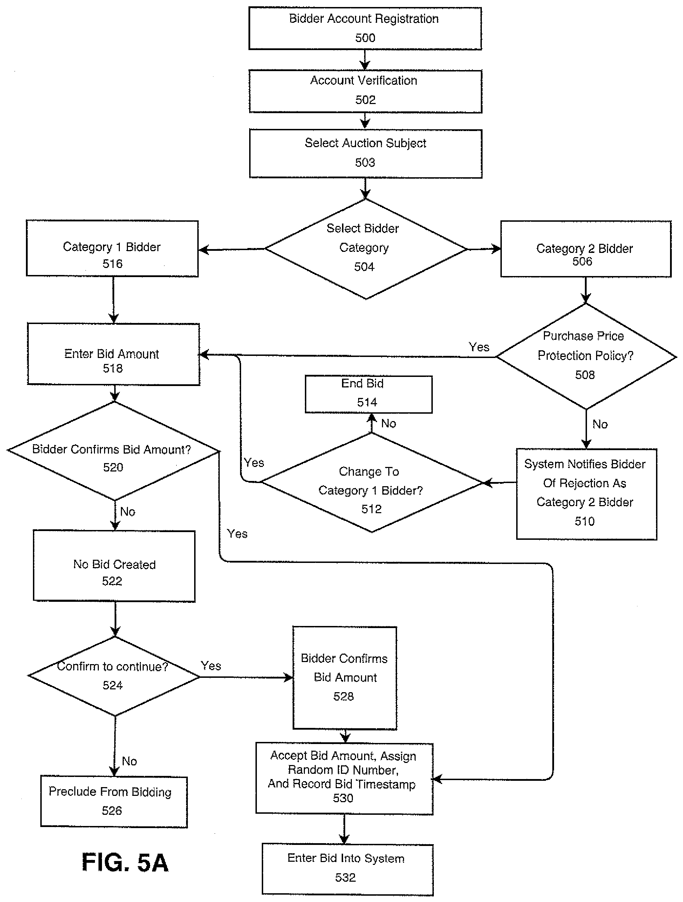

Referring next to FIG. 5A, shown is a flowchart depicting a bidding process from the bidder's side, in accordance with an exemplary embodiment of the invention. As shown, bidders initially register an account with the system (Step 500) that is verified (Step 502) before being permitted to submit bids for a reverse auction. Registering bidders may be required to sign or otherwise agree to one or more user agreements outlining relevant rules preset for both buyers and bidders prior to the start of the reverse auction. During registration, the systems disclosed herein can require that a user provide personally identifiable information and valid financial information, including, for example, name, address, email, phone number, bank information, etc. User accounts can be verified by the system through email, text, and/or phone by the system administrator. The systems disclosed herein may allow users to only register one account by email, text, and/or phone with a username for bidding or for listing a request for an auctioned subject/service. An account may be used to either bid on or list a reverse auction.

To begin an auction, registered bidders must select an auction subject (Step 503) to bid on, and choose a bidding category (Step 504). Preferably, the bidder is prompted to select a bidding category (e.g., Category 1 or Category 2) based on experience, preference, in consideration of a particular reverse auction strategy, or simply at random. A Category 1 winning bidder is required to offer the auction subject (i.e., the good/service) for a submitted sealed Category 1 bid amount, and is not associated with any commitment to pay a protection fee. A bidder who opts to be a Category 2 bidder (Step 506) is prompted to commit to paying a fee to purchase the price-protection policy should his/her bid be deemed the winning bid or pay a fee as a deposit from the bid account but then commit to pay the amount, which is sealed and kept confidential along with the deposit (Step 508). If such Category 2 bidder were to submit a winning bid, then he/she would have a chance of increasing the final winning bid amount to which he/she is entitled (e.g., to provide the auction subject to the buyer for a recalculated winning bid amount which is potentially higher than the winning bid amount submitted by the Category 2 bidder), and to potentially recover something simply for participating in the auction. The price-protection policy can correspond to a certain percentage, set by the buyer, the system or a third-party, of the submitted bid amount (e.g., 3%, 5%, etc.). The bidder agrees to pay this price-protection percentage fee should he/she be the winning bidder in exchange for being allowed to participate as a Category 2 bidder. Alternatively, the bidder may be required to pay this fee regardless of whether or not he/she wins the auction.

If the bidder attempting to select Category 2 does not commit to pay a fee to purchase the price-protection policy, then the system will advise and/or notify the bidder that he/she will be rejected as a Category 2 bidder (Step 510), and/or provide the bidder with the option to be a Category 1 bidder (Step 512). If the bidder chooses to be a Category 1 bidder, then the bidder may begin to bid as a Category 1 bidder on the reverse auction by entering a bid amount to submit to the system (Step 518). If the bidder does not agree to be a Category 1 bidder, then the bidder is not permitted to bid in the reverse auction (Step 514). The system can be configured to choose the category for the bidder and/or to only allow a single category of bidders (e.g., Category 2 bidders).

As used herein, the term "winning bid amount" is an amount of the final bid submitted by a winning bidder of the auction. The term "recalculated winning bid amount" (i.e., "recalculated price", "recalculated final price", "recalculated amount", "final recalculated amount", etc.) is an amount calculated by applying a formula described herein to the winning bid amount. Also, the specific names assigned to these two bidding categories are for reference only and may alternatively be referred to as, for example, bidding categories A and B or "experienced" and "inexperienced" bidding categories. In preferred embodiments, the systems and methods disclosed herein can enable bidders to change the categories they belong to when bidding in the same or in different reverse auctions. A bidder who confirms he/she wants to be a Category 1 bidder when bidding for one auctioned subject may identify himself/herself as a Category 2 bidder during the reverse auction or when bidding for another auctioned subject in another reverse auction.

A bidder who initially opts (Step 504) to be a Category 1 bidder (Step 516) may begin bidding by entering a bid amount (Step 518). Similarly, a bidder who initially opts (Step 504) to be a Category 2 bidder (Step 506) and agrees to purchase the price-protection policy (Step 508) may begin bidding by entering a bid amount (Step 518). The bidder, regardless of whether a Category 1 or Category 2 bidder, then preferably provides double confirmation that the bid amount is accurate and confirm the bidder's ability to provide the auction subject for the amount of the bid (Step 520). If the bidder does not confirm either the bid amount or the ability to provide the auction subject for the amount of the bid (No, Step 520), then the bidder is notified by the system that no bid has been created or allowed (Step 522). The bidder may choose to change the bid amount and continue (Yes, Step 524) by confirming the bid amount and ability to provide the auction subject at the bid amount (Step 528). If the bidder still chooses to not confirm (No, Step 524), then the bidder is precluded from bidding (Step 526). If the bidder confirms (Step 528) or (Step 520), then the bid amount is accepted and the bidder is assigned a random ID number and the system records a timestamp for the bid (Step 530). The bid is then entered into the system and stored in the database (Step 532).

While double confirmation is provided by the system to serve as a better practice purpose for the auction, an auction may still proceed without the double confirmation. Once the bid is double-confirmed and stored in the database of the system, the system can accept the submitted bid amount and enter it for the reverse auction within the bidding system (Step 532), and seal the bidder's ID. Bidders may be listed or displayed in the order in which they bid using randomly generated anonymous ID numbers by the system. The bidders' identities and respective bids and bid amounts are not accessible to other bidders (except for, potentially, the bidders' anonymous randomly generated ID numbers), even after the reverse auction closes. That is, the accepted bid amounts are sealed, and each bidder and bid amount is assigned a random identification number and identified with a timestamp to track status of the bid and indicate when it was accepted by the system (Step 530). Users may be allowed to see the applicable remaining time for the reverse auction regardless of where they are located. However, the system may enable the buyer to view the real identification of the winning bidder. In other embodiments, the system can be configured to allow all bidders to see the bid or amounts of other bidders after the auction ends with or without seeing the bidders' real identifications.

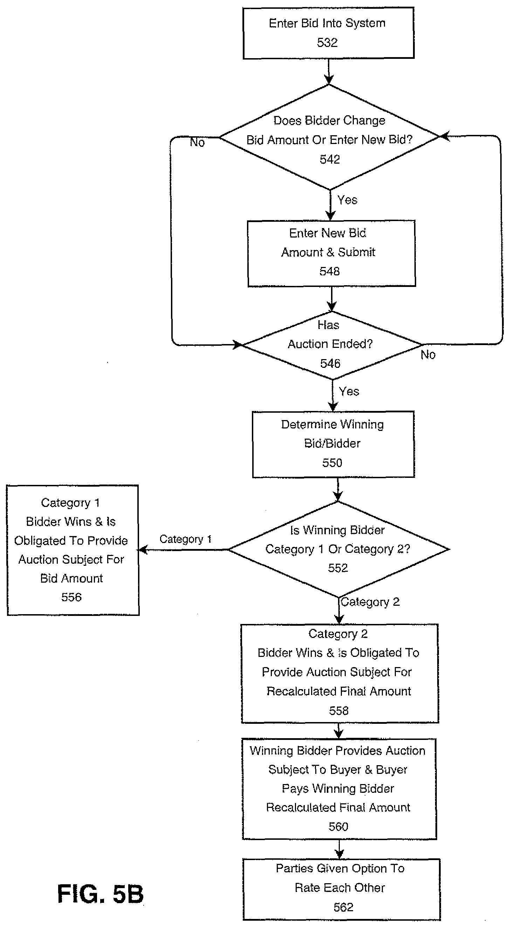

Turning now to FIG. 5B, shown is a flowchart depicting a continuation of the bidding process shown in FIG. 5A. As shown, after the bid has been entered into the system (Step 532), a bidder may change the submitted bid amount before the reverse auction closes or ends (Step 542). However, in preferred embodiments, every bidder is allowed to submit only one final valid bid. If the bidder does not change his/her submitted bid (No, Step 542), then the system determines the submitted bid to be the valid bid for that bidder. If the bidder decides to change his/her submitted bid(Yes, Step 542), then the bidder may enter a new bid amount, and submit it to the system (Step 548). In preferred embodiments, if a bidder submits a new bid or otherwise re-submits a bid, then any previously submitted bids by that bidder are replaced. In this way, each bidder may only have one pending valid bid for an auction subject. In alternative embodiments, the system may determine only the most recent bidto be the valid bid, or may alternatively select the lowest bid to be the valid bid, depending on the predetermined rules for the auction. If the bidder does not change the bid again, then the system will determine the re-entered submitted bid to be the only valid bid by that bidder.

In alternative embodiments, the system may be configured to allow a bidder to change his/her bid by raising, lowering, re-submitting a bid, change a bidding category, and/or change a bid amount before the close of the reverse auction. Bidders may also be allowed to withdraw their bids before the reverse auction closes. Withdrawn and/or changed bids may still remain sealed so others will not be aware of them. By keeping withdrawn or changed bids confidential, the system can prevent bidders from using withdrawn and/or changed bids as reference points, and can eliminate or reduce misrepresentation or fraud. The system may continuously monitor the auction for any indications from bidder computing devices 106/110/112 that a bidder wants to change an existing bid (Step 542) up until the auction has closed or ended (Step 546). Upon expiration of the time frame for the reverse auction, the reverse auction will close or end (Step 546).

The system can be configured using computer-executable instructions, such as program modules, to transmit a first representation of the anonymous, sealed bid online reverse auction to at least one of remote bidder computing devices 106/110/112 during the reverse auction. The first representation preferably does not include any bid amounts, but can include, for example, one or more different (or anonymous) identifiers relating to the status of the reverse auction (e.g., the randomly assigned ID numbers assigned to the bids/bidders, the number thereof, the timing thereof, and/or the time remaining in the reverse auction, etc.). Receipt of the first representation by the remote bidder computing devices may trigger or cause them to display at least a portion of the information related to the first representation.

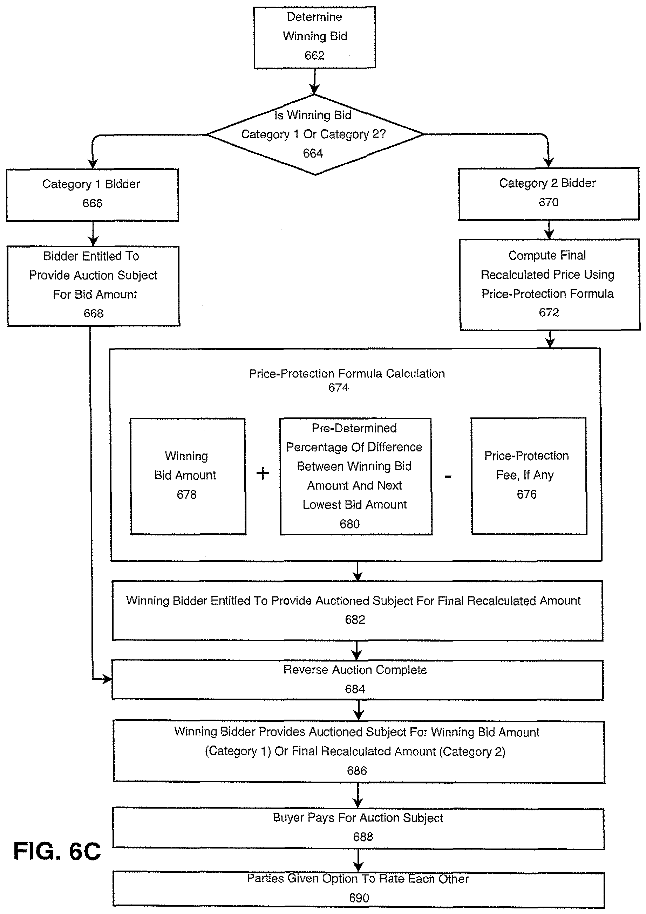

Once the reverse auction closes, the system determines a winning bid amount based on predetermined rules for the auction (Step 550), and the bid amounts may be disclosed to the participants of the reverse auction. The bid amounts may alternatively not be disclosed except for the winning bid amount to the buyer. The system next determines whether and which bidder wins the reverse auction (Step 552). If the bidder wins the reverse auction and is a Category 1 bidder (Yes, Category 1, Step 552), then the winning bidder will be obligated to and agrees to provide the auction subj ect to the buyer for the bid amount submitted (Step 556). If the bidder wins the reverse auction and is a Category 2 bidder (Yes, Category 2, Step 552), then the winning bidder will be obligated to and agrees to provide the auction subject to the buyer for a recalculated final price that is determined after applying a price-protection formula, plus related costs, if any (Step 558), as discussed with respect to FIG. 6C. The system may be configured to require a transaction to take place between the buyer and the winning bidder-seller within a certain amount of time (e.g., within ten days of the end of the reverse auction).

After a winning Category 2 bidder provides the auctioned subject to the buyer, the buyer pays the winning bidder a final recalculated winning bid amount (Step 560). The buyer may be obligated to pay the winning bidder before the winning bidder provides the auctioned subject. In other embodiments, the buyer may be obligated to pay the winning bidder only after receipt of the auctioned subject. Payment may be exchanged in part or in full during these transactions depending on specific agreements of the parties, the particular reverse auction, and/or user agreements. Once the auctioned subject has been received and payment has been made, the parties may be provided with the option to rate each other (Step 562) through the system, and such ratings may be stored in database 104. The process concludes once ratings are received or after the parties decline to rate one another.

The system can also be configured using computer-executable instructions, such as program modules, to transmit a second representation of the anonymous, sealed bid online reverse auction, either at a later point in the auction or once all bids are received and the auction ends, to one or more of the bidder computing devices 106/110/112. The second representation can include at least a winning bid amount associated with a winning bidding Category 2 bidder corresponding to an assigned identifier. Receipt of the second representation by the remote computing devices can trigger or cause at least one of the remote computing devices to display at least a portion of the information related to this second representation. The second representation may additionally or alternatively include one or more of the different identifiers relating to a second (e.g., later or end) status of the reverse auction, the randomly assigned ID numbers assigned to the bids/bidders, the number thereof, the timing thereof, etc. The information or image data relating to the first or second representations may be displayed using bitmap representation, or any other known technique for displaying image data.

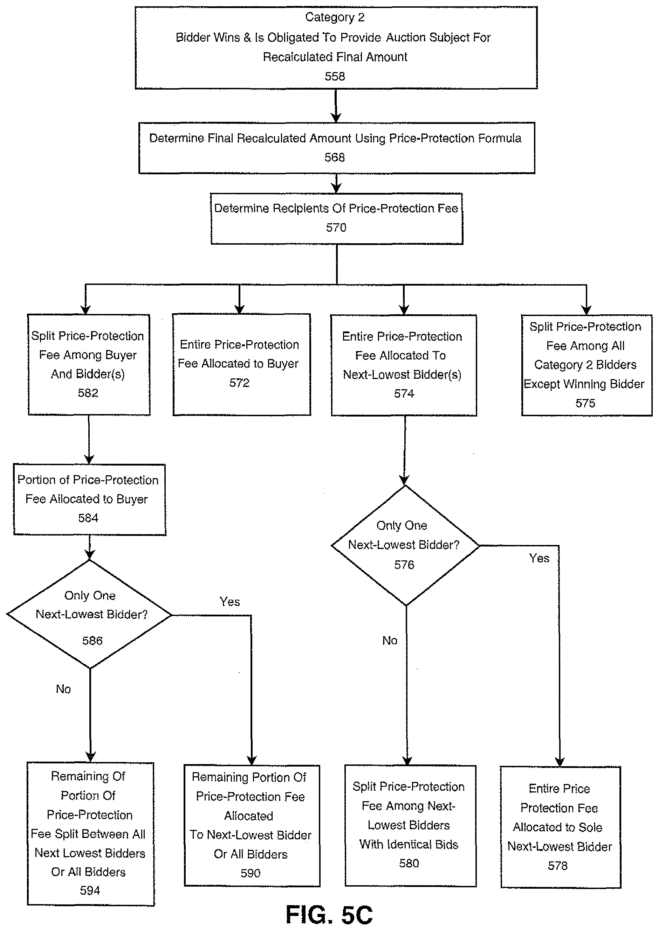

FIG. 5C shows a flowchart depicting an example process of distribution of a price-protection fee in accordance with an exemplary embodiment of the invention. As illustrated, the price-protection fee paid by a Category 2 bidder may be split or allocated in various ways. If a Category 2 bidder wins the reverse auction, then the winning bidder will be obligated to and agrees to provide the auction subject (e.g., the good, service or both) to the buyer for a final recalculated price (Step 558), and the final recalculated price is determined by applying the price-protection formula (Step 568). In preferred exemplary embodiments, the price-protection formula subtracts the price-protection fee from the sum of the winning bid and a predetermined percentage of the difference between the winning bid and the next-lowest bid (Step 568) to compute a final recalculated winning bid amount, as discussed with respect to FIG. 6C. Alternatively, any other designated bid based on buyer presets, default system settings, or a third-party, may be used in calculating the difference (e.g., not just the next-lowest bid, the third, fourth, fifth, etc. lowest bid with respect to the winning bid). In other embodiments, the price-protection formula does not include subtracting the price-protection fee, and comprises the sum of the winning bid and the predetermined percentage of the difference between the winning bid and the next-lowest bid. The price-protection fee is generally a predetermined percentage of the winning bid amount, and once the winning bid has been selected and the final recalculated price calculated, the system then determines the recipients of the price-protection fee paid by the winning Category 2 bidder (Step 570).

The system, the buyer, or a third-party may establish one or more sets of predetermined rules for allocating the price-protection fee submitted by a winning bidder. The buyer or the system can pre-set whatever rule he/she wishes with respect to allocation and distribution of the price-protection fee(s), including but not limited to, any one of the auction participants. For example, rules may be established dictating that the entire price-protection fee may be allocated entirely to the buyer (Step 572), entirely to the next-lowest bidder or bidders (Step 574), among all Category 2 bidders except the winning bidder (Step 575), the buyer and bidder(s) (Step 582), the system, the buyer, the winning bidder, and the losing bidders, whether they be Category 1 or Category 2 bidders. For example, the buyer may decide that he/she does not want to allocate any of the price-protection fee to the highest bidder, and wishes to allocate all of it to, for example, the second or third lowest bidder. The system can also determine the number of next-lowest bidders to whom the price-protection fee should be paid. If there is only one next-lowest bidder (Yes, Step 576), then the entire amount of the price-protection fee may be allocated to the sole next-lowest bidder (Step 578). If there are several next-lowest bidders (e.g., if two or more Category 2 bidders bid an equal amount and the equal amount is the next-lowest amount relative to the winning bid) (No, Step 576), then the entire amount of the price-protection fee can be split among all of the next-lowest bidders with identical bids, by an allocation percentage which may be predetermined by the buyer, the system or a third-party (Step 580).

Alternatively, the price-protection fee paid by the winning bidder may be split, such as equally, in whole or in part, among all Category 2 bidders who did not win the reverse auction (Step 575). In yet other embodiments, the price-protection fee may be entirely or partially allocated to the system or a third-party where the system may be the entity who developed, hosted, or otherwise provided a software application for the online reverse auction. Also, the third-party may include the managing company or agent of the system, or may further include a representative of a buyer, representative of a seller, website manager, auction housing company, outside investors of the auction site, or others having vested interests in the auction. In such embodiments, the system or third-party may collect all or a portion of the price-protection fee from a given auction.

In another embodiment, the price-protection fee can be split between the buyer and bidder(s) (Step 582) by an allocation percentage which may be predetermined (e.g., by the buyer, the system, or a third-party). For example, one portion of the price-protection fee may be allocated to the buyer (Step 584), while the remaining portion of the price-protection fee may be allocated to the next-lowest bidder (Step 590) if there is only one next-lowest bidder (Yes, Step 586). Where there is no second-lowest bidder because only a single bidder bid on the reverse auction, then if such single bidder wins the reverse auction, then the buyer may keep all of the price-protection fee paid by the single bidder, or may give back part or all of it to the single bidder. If there are multiple next lowest bidders with identical bids, then the price-protection fee can be split among all of the next lowest bidders (Step 594), or may be split among all of the remaining bidders who did not win. The allocation of the price-protection fee may be customizable by the buyer, the system, or a third-party based on predetermined rules.

In preferred embodiments, only the winning bidder pays the price-protection fee, and the fee is distributed to one or more of the other bidder-sellers. In other embodiments, the price-protection fee may be a required payment by every Category 2 bidder, regardless of whether or not he/she is a winning bidder, and the total price-protection fees collected can be split based on one or more predetermined rules. Such embodiments contemplate the price-protection fee as consideration for the right to be a Category 2 bidder, and thus the potential to increase the price he/she is entitled to receive (e.g., above the amount of his/her winning bid) from the buyer in exchange for providing the auction subject. It will be appreciated that such a "pay to play" embodiment can potentially increase total revenue to the buyer, the system, or a third-party by virtue of requiring payment from all Category 2 bidders. These payments may be required prior to, during, or after the close of the reverse auction, and it will be appreciated that regardless of whether the reverse auction rules offer Category 2 as "pay to play" or "get paid to play" with respect to the price-protection fee, then allocate the price-protection fee based on predetermined rules.

If the buyer is confident that the auctioned subject will attract many bidders, he/she may choose to keep the entire amount of the price-protection fee paid. On the other hand, if the buyer wishes to attract more bidders to participate in the reverse auction for the auctioned subject, he/she may decide to award the entire price-protection fee to the next-lowest bidder(s) or to all or a portion of the participating bidders. If only one bidder has placed a bid for the auctioned subject and the bidder identifies himself/herself as a Category 2 bidder, and a reserve price of the buyer can be considered as the next-lowest bid amount for purposes of recalculation if the sole bid is a Category 2 one and under the reserve price.

The distribution/allocation rules may be pre-set by the buyer, the system by default or by a third-party, for example, in accordance with a predetermined scale, correlation, or corresponding array of percentages, or may be decided by the buyer after the reverse auction ends. The allocation amounts of the price-protection fee may be based on the rankings of bidders relative to the winning bidder (e.g., second lowest, third lowest, fourth lowest, etc.), with the second lowest bidder receiving the highest percentage of the price-protection fee, the third lowest bidder receiving a smaller percentage of the price-protection fee, the fourth lowest bidder receiving a smaller percentage of the price-protection fee, etc.). Alternatively, the winning bidder may be entitled to all or a portion of the price-protection fee. In one embodiment, if every Category 2 bidder pays the price-protection fee upfront, then the winning bidder receives a "kick back" of what he/she has already paid to the system. If only the winning bidder pays the price-protection fee, then the amount of the price-protection fee owed by the winning bidder once the reverse auction ends may be reduced depending on the allocation rules pre-set by the buyer.

In other embodiments, the predetermined rules of an auction may allow for allocation of at least a portion of the price-protection fee in a particular auction (e.g., a portion of the price-protection fee paid by a winning Category 2 bidder or by all Category 2 bidders in the particular auction) by any user of or registrant to the system, including non-participant users (e.g., users of the system who did not participate in the particular auction). The individual non-participant user's percentage of the available portion he/she can collect from a particular auction can be based on, for example, a user's aggregate ranking by the system. The user's aggregate ranking can be based on, for example, the total number of auctions the user has previously participated in through the system (as a buyer or bidder), the total number of auctions in which the user has previously paid a price-protection fee (e.g., as a winning Category 2 bidder or as a losing Category 2 bidder in certain "pay to play" auctions where all Category 2 bidders were required to pay the price-protection fee), the total amount of price-protection fees the non-participant user previously paid, the total number of bids previously submitted, the total number of actions the user has taken through the system (e.g., total time spent online and interacting with the system), the total amount of money the non-participant user has paid for goods or services as a buyer in reverse auctions conducted through the system, and/or the user's rating by other users of the system over time (e.g., Step 562). One or more of these factors can be assigned a particular weighting in calculating the user's aggregate ranking. In the event that one or more users are tied in ranking, the system can use additional criteria to in determine priority, such as the first of the tied users to request payment. Alternatively, the system may simply split a portion of the fee between tied users. Such data can be stored in database 104, and dynamically updated as users participate in one or more auctions. Preferably, the system requires a user to verify that he/she is not a computer by periodically prompting input of randomly assigned characters displayed onscreen for verification.

Upon completion of a reverse on-line auction, non-participant users logged into the system may be given a notification (e.g., by text, e-mail, or popup onscreen) that one or more other reverse auctions in which they did not participate have ended, and that a portion of one or more price-protection fees are "up for grabs" on a first come, first serve basis. Indicators may be displayed to users as symbols on-screen to convey this information. The non-participant users may be given a fixed period of time to collect their portion of the price-protection fee by simply clicking on the particular reverse auction and an on-screen collection button, or by any other means of notification to the system. Non-participant users with the highest ranking who are logged into the system may be given first priority to collect any available portion of the price-protection fee allocated by the specific predetermined rules of the particular auction, which may indicate, for example, that the first number of non-participant users to select payment within a certain time period will receive it. Upon expiration of the time period, any remaining portion which was available to non-participant high ranking users may then be then made available to lower ranking non-participant users, or simply "returned" to the particular reverse auction and allocated in accordance with additional predetermined allocation rules for the participants therein (e.g., the buyer, bidder(s), system administrator, etc.), or to all Category 2 bidders (for the particular reverse auction or generally).

A portion of the price-protection fee in a particular auction may be allocated to new registered users of the system, or only to new registered users who participate or have participated in a reverse auction as a Category 2 bidder. Category 2 bidders of the particular auction may be given priority to receive their individual portion of the price-protection fee, but not a guarantee unless they notify the system within a specific time frame they wish to collect. Alternatively, the beneficiary of all or at least a portion of the price-protection fee for a particular reverse auction may be a charity or other third-party. If such third-party charity is a beneficiary, then such payments by bidders may be tax deductible depending on applicable national and local tax laws.

In certain embodiments, the price-protection fee may be fixed regardless of the amount of the winning Category 2 bidder's bid, and/or regardless of each Category 2 bidder's bid amount (in particular pay to play reverse auctions where each Category 2 bidder is required to pay a price-protection fee). Each Category 2 bidder may simply be required to pay, for example, $5, $10, $20, or $50 regardless of their bid amounts. The fixed amount of the price protection fee may be set by the buyer or the system, and may or may not be correlated with the buyer's, the system's or the bidders' perceived market value of the auction subject. In other embodiments, the price-protection fee may be a combination of a fixed amount and a percentage of the Category 2 bidder's bid (e.g., the fixed amount may be added or subtracted from the amount of the fee determined from the percentage of the bid). For example, the price protection fee may be ($10)+[10%*(Amount of Winning Bid)] or [10%*(Amount of Winning Bid)] - $10. If this amount calculates to less then zero, then the price protection fee can simply be set to zero. The system may individualize and modify the fixed amount of the price protection fee set by a particular reverse auction based on the bidder's ranking as discussed herein, prior price protection fee payments, etc.

If the price protection fee paid by the winning Category 2 bidder or by a plurality of Category 2 bidders is less than a predetermined threshold, then the system and/or the buyer can allocate additional funds to Category 2 and/or Category 1 bidders to attract more bidders to the system and/or retain existing users. The source of such additional funds may be, for example, system registration fees of all users, buyer fees for listing an auction subject, out of pocket expenses, etc. A buyer who is a user of the system, or a third-party who wants to utilize the system to conduct a reverse auction, may conduct a promotion in order to attract additional bidders to bid on an auction subject through the reverse auction processes described herein. The buyer or third-party may allocate funds for distribution during or at the end of the reverse auction (e.g., in addition to the price protection fee, if any), and the allocation of funds may or may not be based on the price protection fee rules, depending on pre-set system configurations and the predetermined rule(s) of the particular reverse auction. The third-party may be, for example, an administrator or representative of the system, or an advertiser or advertising company that wants to utilize reverse auctions through the system for providing goods and/or services.

It will be appreciated that the embodiments disclosed herein are aimed at enabling system customization and encouraging and increasing user participation, and that pre-set system configurations combined with the one or more predetermined rules of particular reverse sealed bid online auctions will dictate allocation of the price-protection fees, regardless of whether the allocations are fair or unfair. Additionally, pay-to-play auctions which require all Category 2 bidders to pay a price-protection fee are further incentivized by such embodiments because even if participating bidders do not win the auction (and thus lose their price-protection fees), the price-protection fees they pay can increase their aggregate rankings, and thus their priority for collecting portions of price-protection fees in other auctions they do not participate in, and the percentages to which they may be entitled.

The net amount paid by the buyer to the winning bidder for the auction subject may be different from the net amount the winning bidder ultimately receives by using the reverse auction because the winning bidder pays the price-protection fee in full, and the buyer may receive some, none, or all of this price-protection fee. By way of example, if the recalculated amount of a winning Category 2 bidder is $10, and this recalculated amount includes a $2 price-protection fee, then if the $2 goes to the remaining bidders, the buyer pays $10 to the winning bidder for the auction subject (the recalculated amount), and the buyer receives no portion of the $2. The buyer thus pays a net of $10 for the auction subject. The winning bidder however only receives a net amount of $8 (i.e., the $10 from the buyer minus the $2 price-protection fee paid to one or more other bidders). If the buyer receives 50% of the price-protection fee, then the buyer pays $10 for the auction subject (the recalculated amount) and receives $1 of the price-protection fee. In this scenario, the buyer pays a net $9, while the seller still nets $8. If the buyer receives 100% of the price-protection fee, then the buyer pays $10 for the auction subject (the recalculated amount) and receives $2 of the price-protection fee. Here, the buyer pays a net $8 and seller still nets $8. The above transactions of payment can be one transaction or separate transactions.

The allocation of the price-protection fee may be based on whether or not the resulting net amount the buyer pays is less than or equal to the reserve price. If the recalculated amount is more than the reserve price, the buyer may be entitled to receive as a kickback a percentage of the price-protection fee that enables him/her to pay a net amount equal to not more than the reserve price. The buyer does not pay a net amount greater than the reserve price, and the winning bidder still receives the recalculated amount from the buyer. The price-protection fee may also be allocated in accordance with a dynamic formula that dynamically changes a price of the recalculated winning bid amount over time to be equal to or less than the reserve price set by the buyer.

The Predetermined Percentage (i.e., the percentage applied to the difference between the amount of the winning bid and an amount of the next-lowest bid hereafter "the Predetermined Percentage") and the Price-Protection Fee Percentage (i.e., the percentage applied to the winning bid amount) used during a calculation of the Final Recalculated Price for Category 2 bidders can each be predetermined and preset in the system by the buyer prior to the start of the reverse auction, and for any amounts the buyer chooses. Alternatively, the auction house, the system, or a third-party may establish these percentages by default. Either way, all reverse auction rules are preferably laid out at the beginning of the reverse auction (e.g., at least before the first bid is submitted).

The Predetermined Percentage and the Price-Protection Fee Percentage may be correlated. Exemplary correlations between the Price-Protection Fee Percentage and the Predetermined Percentage can include either direct or indirect relationships, linear or non-linear relationships, and the like. In preferred embodiments, an increase in the price-protection fee percentage is associated with an increase in the predetermined percentage. The more a bidder is willing to pay in the price-protection fee should he/she win, the more he/she may want in potential upward adjustment (e.g., a greater percentage of the difference between his/her bid and the next lowest bid). In other embodiments, the percentages may be inversely correlated (e.g., the predetermined percentage may decrease as the price-protection fee increases).

For example, the Predetermined Percentage may be correlated to be ten times the value of the Price-Protection Fee Percentage value, such that a Price-Protection Fee of 0.5% would correlate to a Predetermined Percentage of 5%, a Price-Protection Fee of 3% would correlate to a Predetermined Percentage of 30%, a Price-Protection Fee of 9% would correlate to a Predetermined Percentage of 90%, etc. In such embodiments, the system may enable a bidder-seller to choose a particular Predetermined Percentage. Once the Predetermined Percentage is chosen, the system automatically assigns the appropriate correlated Price-Protection Fee Percentage, which may be one-tenth (or some other correlation factor, e.g., one-fourth, one-fifth, etc.) of the Predetermined Percentage chosen by the bidder. Conversely, if the bidder-seller chooses a particular Price-Protection Fee Percentage, then the system automatically assigns a Predetermined Percentage, which may be ten times (or some other correlation factor, e.g., four times, five times, etc.) the Price-Protection Fee Percentage chosen by the bidder. In preferred embodiments, a higher price-protection fee percentage will correspond to a higher predetermined percentage, but it will be appreciated that the inverse relationship may be used as well or there may be no correlation between the two.

In yet another alternative embodiment, the Predetermined Percentage, which may range, for example, from 5% to 50%, may be set to increase by 5% for each incremental increase in the Price-Protection Fee Percentage, which ranges from 1% to 13.5%. In particular, the initial values of 1%, 2.5%, and 3% of the Price-Protection Fee Percentage correspond to 5%, 10%, and 15% respectively, of the Predetermined Percentage. Above 3%, each incremental increase of 1.5% in the Price-Protection Fee Percentage corresponds to an increase in the Predetermined Percentage up to values of 13.5% and 50% respectively. It will be appreciated that other correlations and/or pre-set correlated values may be utilized in accordance with the invention.

In still other embodiments, the preset rules may define the Predetermined Percentage to which the winning bidder is entitled as a function of the difference between the value of the winning bid and the value of the next lowest bid. By way of example, if the winning bid is $10 and the next lowest bid is $110, then the Predetermined Percentage may then be set to 10% (i.e., because there is a high bid spread, then there will be a low percentage), for a net adjustment of [10%*($110-$10)]=$10. If the winning bid is $10 and the next lowest bid is $60, then the predetermined percentage may then be set to 20% (i.e., instead of 10%), for a net adjustment of [20%*($60-$10)]=$10. Thus, the predetermined percentage may increase (or decrease) linearly in proportion to or be correlated in some other way with the spread (or difference) between the winning bid and the next lowest bid. In this manner, large bid spreads will not force a buyer to pay an exorbitantly inflated price for the auction subject. These rules may be preset by the buyer in advance of the auction or may be set by the system as default settings.

Preferably, a sealed bid reverse online auction utilizing correlated Predetermined Percentage and Price-Protection Fee Percentage values discloses the applicable percentages to all bidders before bidding takes place. It will be appreciated that utilizing such correlated percentages may encourage participation by more bidders in a sealed bid reverse online auction, provide incentives for bidders to submit lower bids, and allow for greater potential reward to the bidder in exchange for an obligation to pay back a percentage of the winning bid.

The exemplary systems and methods disclosed can be further understood with reference to Examples 1-8 illustrated below. It will be appreciated that the Category 2 Price-Protection Formula encourages bidders in a reverse auction to offer lower bids because they can win the reverse auction and potentially be entitled to a higher final price for providing the auction subject than their actual final bid amount. Unless established by predetermined rules or the buyer directs otherwise, the Winning Bid can automatically default to the lowest bid in the reverse auction. However, as discussed above, the system can alternatively be configured to allow the buyer (or preset by default) to choose or designate which bid based on a set of predetermined rules to be the Winning Bid, and to adjust the percentages used in the formulas accordingly.

As further discussed below with respect to Examples 1-8, purchasing a price-protection policy will not always raise the winning bid amount the bidder is entitled to from the buyer. For example, if there is a large difference between the winning bid amount and the next-lowest bid amount, then a bidding Category 2 bidder buying the policy will likely have his/her bid amount substantially increased. However, if there is a small or nominal difference between the winning bid amount and the next-lowest bid amount, then a Category 2 bidder buying the policy may end up being entitled to less money for the auctioned subject because the recalculated price the winning bidder will be entitled to may be lower than the originally submitted amount of the winning Category 2 bid. This potential loss associated with the price-protection policy will help prevent bidders from abusing the system and optimizing the buyer benefit. If there were not any potential loss involved after subtracting the price-protection fee, then every bidder would buy a price-protection policy to increase the amount to which they are entitled from the buyer beyond the winning bid amount, which is not in the best interest of the buyer. To illustrate how a Category 2 buyer's price-protection plan works according to the invention, examples are provided below in which a buyer submits a reverse auction request for a good/service. The following price-protection formula is used after the close of the reverse auction to compute the final Recalculated Price the buyer has to pay for the good/service auctioned when a Category 2 bidder wins, and may be represented by the following equation: ${R}_{P} = {B}_{W} + \left[{P}_{PCT}*\left({B}_{NL}-{B}_{W}\right)\right] - \left[{P}_{PP}*\left({B}_{W}\right)\right]$ Equation 1 where R_{P} is the Recalculated Price amount; Bw is the Winning Bid amount; P_{PCT} is the Predetermined Percentage; **B_{NL}** is the Next Lowest Bid amount relative to the Winning Bid amount; and **P_{PP}** is the Price-Protection Fee Percentage.

### Example 1

Example 1 shows a reverse auction conducted with three (3) bidders submitting respective bids of $10, $100 and $101, where the buyer chose, prior to submission of any bids or at the beginning of the auction, to have the Lowest Bid be the Winning Bid. The buyer also chose the Predetermined Percentage (**P**_{PCT}) for the auction to be 20%, and chose the Price-Protection Fee Percentage (**P**_{PP}) to be 10%. At the close of the auction (e.g., the expiration of a time period predetermined by the buyer for the auction), if the winning bid/bidder is a Category 2 bid/bidder, then the Recalculated Price, R_{P}, as determined using Equation 1, with a Winning Bid of $10, Next Lowest Bid of $100, Predetermined Percentage of 20%, and Price-Protection Fee Percentage of 10%, is calculated as follows: **R**_{P}=$10+[20%*($100-$10)]-[10%*($10)]=$10+$18-$1=$27. The Recalculated Price here is $27, so even though the winning bid was only $10, the buyer must pay the winning bidder $27 for the goods and/or services instead of the $10 actually bid. Had the winning bidder not selected to be a Category 2 bidder, then he would have only received the $10 actual bid amount for the auctions good/service.

### Example 2

Example 2 shows a reverse auction conducted with three (3) bidders submitting respective bids of $30, $50, and $75, where the buyer chose, prior to submission of any bids, to have the Lowest Bid be the Winning Bid. The buyer also chose the Predetermined Percentage to be 15%, and the Price-Protection Fee Percentage to be 10%. Therefore, upon closing of the auction, if the winning bid/bidder is a Category 2 bid/bidder, then the Recalculated Price, R_{P}, as determined using Equation 1, with a Winning Bid of $30, Next Lowest Bid of $50, Predetermined Percentage of 15%, and Price-Protection Fee Percentage of 10%, is calculated as follows: **R**_{P}=$30+[15%*($50-$30)]-[10%*($30)]=$30+$3-$3=$30. The Recalculated Price here is $30, which is the same as the actual bid submitted, thereby demonstrating that it is possible for the Winning Bidder, as a Category 2 bidder, to receive a final Recalculated Price identical to the actual submitted bid.

### Example 3

Example 3 shows a reverse auction conducted with three (3) bidders submitting respective bids of $30, $50, and $75, where the buyer chose, prior to submission of any bids, to have the Lowest Bid be the Winning Bid. The buyer in this example chose the Predetermined Percentage and the Price-Protection Fee Percentage to be 10%. Therefore, upon closing of the auction, if the winning bid/bidder is a Category 2 bid/bidder, then the Recalculated Price, R_{P}, as determined using Equation 1, with a Winning Bid of $30, Next Lowest Bid of $50, Predetermined Percentage of 10%, and Price-Protection Fee Percentage of 10%, is calculated as follows: **R**_{P}=$30+[10%*($50-$30)]-[10%*($30)]=$30+$2-$3=$29. The Recalculated Price here is $29, which is less than the $30 actual bid. In this instance, the Winning Bidder would actually receive $1 less than the actual bid submitted. Therefore, it will be appreciated that there is a level of risk in choosing to be a Category 2 bidder.

### Example 4

Example 4 shows a reverse auction conducted with three (3) bidders submitting respective bids of $5, $10, and $100. In this auction, the buyer chose, prior to submission of any bids, to have the Second Lowest Bid be the Winning Bid. The buyer here chose a Predetermined Percentage (**P**_{PCT}) of 20% and Price-Protection Fee Percentage (**P**_{PP}) of 10%. At the close of the auction, if the winning bid/bidder is a Category 2 bid/bidder, then the Recalculated Price, R_{P}, as determined using Equation 1, with a Second Lowest or Winning Bid of $10, Next Lowest Bid of $100, Predetermined Percentage of 20%, and Price-Protection Fee Percentage of 10%, is calculated as follows: **R**_{P}=$10+[20%*($100-$10)]-[10%*($10)]=$10+$18-$1=$27. The Recalculated Price here is $27, so even though the winning bid was only $10, the buyer must pay the winning bidder $27 for the goods and/or services instead of the $10 actually bid.

### Example 5

Example 5 shows a reverse auction where an open maximum reserve price is set by the buyer. In this example, the reverse auction is conducted with three (3) bidders submitting respective bids of $10, $100, and $101. Prior to bidding, the buyer chose to disclose an open maximum reserve price of $125, and chose the Lowest Bid to be the Winning Bid. The buyer also set the Predetermined Percentage as 10%, and the Price-Protection Fee Percentage as 10%. Since the maximum reserve price is open to all bidders, the bids received for the auction subject will be under the reserve price. Any bidding price or amount above the open reserve price will be deemed invalid and will be rejected. At the close of this auction, if the winning bid/bidder is a Category 2 bid/bidder, then the Recalculated Price, R_{P}, as determined using Equation 1, with a Winning Bid of $10, Next Lowest Bid of $100, Predetermined Percentage of 10%, and Price-Protection Fee Percentage of 10%, is calculated as follows: **R**_{P}=$10+[10%*($100-$10)]-[10%*($10)]=$10+$9-$1=$18. The Recalculated Price here is $18, which the buyer is obligated to pay. It will be appreciated that an auction having an open reserve price may decrease the likelihood of the auction failing for lack of a valid bid.

### Example 6

Example 6 shows a reverse auction where a hidden (i.e., closed or not visible) maximum reserve price is set by the buyer. In this example, the reverse auction is conducted with three (3) bidders submitting respective bids of $10, $100, and $101. Prior to bidding, the buyer chose to set a hidden maximum reserve price of $15 (which is unknown to all bidders), and chose the Lowest Bid to be the Winning Bid. The buyer also set the Predetermined Percentage as 10%, and the Price-Protection Fee Percentage as 10%. In this example, only the $10 bid falls under the $15 reserve price, and the $100 and $101 bids may be deemed as failed bids by the system for exceeding the $15 reserve price. As the Lowest Bid, the $10 bid is deemed the Winning Bid, and in one embodiment the reserve price of $15 may be deemed the Next Lowest Bid for purposes of calculating the Recalculated Price, **R**_{P}. Upon the close of the auction, the Recalculated Price, R_{P} is calculated here, with a Winning Bid of $10, Next Lowest Bid being the $15 reserve price, Predetermined Percentage of 10%, and Price-Protection Fee Percentage of 10%, as follows: R_{P}=$10+[10%*($15-$10)]-[10%*($10)]=$10+$0.50-$1=$9.50. The buyer is obligated to pay a Recalculated Price in the amount of $9.50 to the winning bidder for the goods and/or services.

Alternatively, a bid received which is above the maximum reserve price, but is the next lowest received bid relative to the winning bid, may be used for the recalculation. In this scenario, the Recalculated Price, R_{P} is calculated, with a Winning Bid of $10, Next Lowest Bid of $100, Predetermined Percentage of 10%, and Price-Protection Fee Percentage of 10%, as follows: R_{P}=$10+[10%*($100-$10)]-[10%*($10)]=$10+$9-$1=$18. In this scenario, the Recalculated Price, R_{P}, is $18, which is above the reserve price of $15. The system may be configured to (i) declare a failed auction and restart the auction, (ii) offer the Buyer the opportunity to pay the Winning Bidder $18 for the auction subject even though it is above the reserve price of $15, and/or (iii) request or demand the Winning Bidder provide the auction subject for the reserve price of $15 even though it is below the recalculated price of $18.

### Example 7

Example 7 shows a reverse auction conducted with three (3) bidders submitting respective bids of $100 (Category 1), $100 (Category 2), and $150 (Category 2). In this auction, the buyer chose, prior to submission of any bids, to have the Lowest Bid be the Winning Bid, and decided that the Predetermined Percentage and Price-Protection Percentage would be 10%. In a preferred embodiment, the recalculated price can be determined for the Category 2 bidder to break the tie and decide which bidder wins the auction. The Recalculated Price, R_{P}, as determined using Equation 1, with a Winning Bid of $100, Next Lowest Bid of $150, Predetermined Percentage of 10%, and Price-Protection Fee Percentage of 10%, is calculated as follows: R_{P}=$100+[10%*($150-$100)]-[10%*($100)]=$100+$5-$10=$95. The Recalculated Price here is $95, which is less than the $100 actual bid, and therefore the Winning Bidder would be the Category 2 $100 bidder, since the Recalculated Price of $95 is now the lowest amount and the Category 1 bidder who bid $100 would lose. If the Recalculated Price was above $100, then the Category 1 $100 bidder would have won, and been entitled to $100 for the auction subject. In other embodiments, all bidders who are tied for the lowest bid may be asked to resubmit bids, regardless of the category to which they belong, and the Lowest Bid among the resubmitted bids can then be selected as the Winning Bid. Alternatively, the system can determine the Winning Bid to be the first submitted bid from the group of equal bids.

### Example 8

Example 8 shows a reverse auction conducted with three (3) Category 2 bidders submitting respective bids of $100, $100, and $150. In this auction, the buyer chose, prior to submission of any bids, to have the Lowest Bid be the Winning Bid, and decided that the Predetermined Percentage and Price-Protection Fee Percentage would be correlated and could be selected individually by each Category 2 bidders individually prior to submitting their respective bids. The first Category 2 Bidder who submitted a $100 bid, **B₂₋₁**, selected a 5% Price-Protection fee, correlating to a 20% Predetermined Percentage in accordance with predetermined rules set by the buyer. The second Category 2 Bidder who submitted a $100 bid, **B₂₋₂**, selected a 10% Price-Protection Fee, correlating to a 40% Predetermined Percentage in accordance with the predetermined rules. Since there are two lowest bids that are Category 2 bids, according to a preferred embodiment, a Recalculated Price can be determined for each of the lowest Category 2 bid to decide which is the Winning Bid. The Recalculated Price, **R_{P-1}**, for the first bid, **B₂₋₁**, as determined using Equation 1, with a Winning Bid of $100, Next Lowest Bid of $150, Predetermined Percentage of 20%, and Price-Protection Fee Percentage of 5%, is calculated as follows: **R_{P-1}**=$100+[20%*($150-$100)]-[5%*($100)]=$100+$10-$5=$105. The Recalculated Price for **B₂₋₁** here is $105. The Recalculated Price **R_{P-2}**, for the second bid, B₂₋₂, as determined using Equation 1, with Winning Bid of $100, Next Lowest Bid of $150, Predetermined Percentage of 40%, and Price-Protection Fee Percentage of 10%, is calculated as follows: **R**_{**P**-2}=$100+[40%*($150-$100)]-[10%*($100)]=$100+$20-$10=$110. The Recalculated Price for **B**_{**2**-2} here is $110. In this example, the Winning Bidder would be the first Category 2 bidder, **B₂₋₁**, who bid $100, who would be entitled to $105 for the auction subject.

It will be appreciated that, in the foregoing examples, although numbers or percentages may vary, the principles disclosed herein are within the scope of the present invention. A Category 2 bidder is the winning bidder, and the percentages for both the Predetermined Percentage and the Price-Protection Fee Percentage are preset by the buyer. However, in other embodiments, a bidder may be able to select his/her own percentages, or the system may be configured to automatically preset one or both of these percentages. In still other embodiments, the Predetermined Percentage and Price-Protection Fee Percentage may be correlated in accordance with predetermined rules such that setting one automatically sets the other as illustrated above.

For example, if a buyer sets up a sealed bid reverse online auction seeking a good/service, the buyer, bidder, the system or a third-party may set the Predetermined Percentage (**P_{PCT}**) to 62%, and the Price-Protection Fee Percentage (**P_{PF}**) to 8%. Conversely, if the buyer wants to use corresponding percentages, then the Predetermined Percentage can follow a pattern or one or more predetermined correlations relative to the Price-Protection Fee Percentage, or vice versa (i.e., such that the P_{PF} increases as the P_{PCT} increases, or the P_{PF} increases as the P_{PCT} decreases, or the P_{PF} decreases as the P_{PCT} increases, or the P_{PF} decreases as the P_{PCT} decreases). Similarly, the P_{PCT} can follow a pattern or correlations relative to the difference (D) between the winning bid and the next lowest bid (i.e., such that the P_{PCT} decreases as the D increases, or the P_{PCT} decreases as the D decreases, or the P_{PCT} increases as the D decreases, or the P_{PCT} increases as the D increases). If the buyer decides to use corresponding percentages, then the buyer, bidder, or the system may set a fixed number for the Price-Protection Fee Percentage which directly corresponds (e.g., by a factor of 10) to the Predetermined Percentage. For example, if the buyer sets the Price-Protection Fee Percentage to 1%, then the Predetermined Percentage may automatically be set to 10%. Similarly, if the buyer sets the Price-Protection Percentage Fee to 2%, then the Predetermined Percentage may automatically be set to 20%, and so forth. In embodiments with such correlated percentages, the Predetermined Percentage may be correlated to increase as a function of the increase of the Price-Protection Fee Percentage. In this manner, as the bidder-seller agrees to pay out a higher percentage of his/her bid should he/she win, he/she can increase the potential return by getting a higher percentage of the difference between the Winning Bid and the Next Lowest Bid.

In an alternative embodiment, a Category 2 buyer's price-protection plan works in a manner such that the price-protection fee is a separate transaction from the recalculation according to the price-protection formula. That is, after the close of the reverse auction an alternative formula may be used to calculate the final Recalculated Price the buyer has to pay for the good/service auctioned when a Category 2 bidder wins the reverse auction. This alternative formula does not factor in the price-protection fee paid by the winning bidder or other bidders, and states as follows: (Recalculated Price)₂=[Winning Bid]+[Predetermined Percentage*(Next Lowest Bid-Winning Bid)], which may be represented by the following equation: ${R}_{P 2} = \left[{B}_{W}\right] + \left[{P}_{PCT}*\left({B}_{NL}-{B}_{W}\right)\right]$ Equation 2 where R_{P2} is the alternative Recalculated Price₂ amount; B_{W} is the Winning Bid amount; P_{PCT} is the Predetermined Percentage; and B_{NL} is the Next Lowest Bid amount relative to the Winning Bid amount.

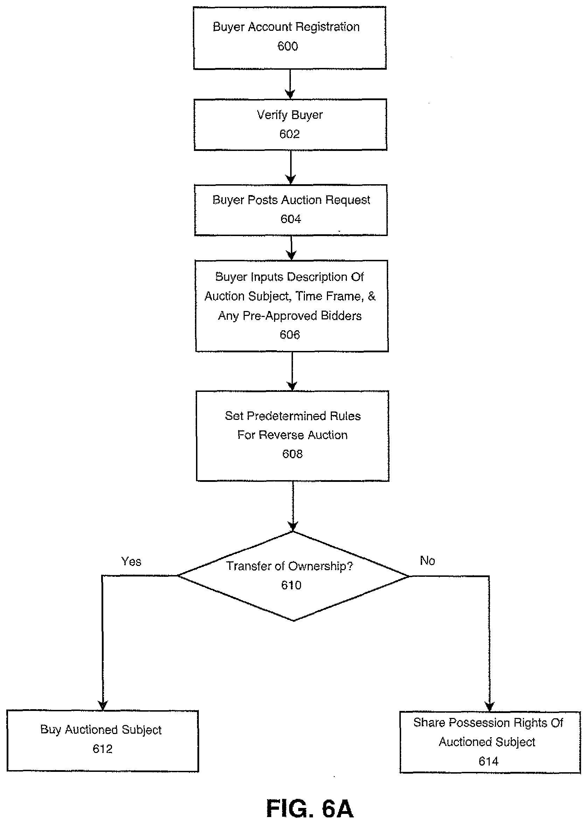

Turning next to FIG. 6A, illustrated is a flowchart depicting a bidding process from the buyer's side in accordance with an exemplary embodiment of the invention. As shown, buyers may register an account with the system (Step 600). Before setting up the details of the reverse auction, the buyer will be subject to account verification (Step 602), which may include background check, credit history check, review of auction history, reference check, double confirmation that he/she can and will make proper payment upon receipt of the goods/services desired, etc. After verification by the system is complete, the buyer may post a reverse auction request (Step 604). When beginning the process of setting up a reverse auction, the buyer may be prompted to input a description/introduction of the auction subject with a written description, photos, videos, etc., explaining the (good(s) and/or service(s) sought), the desired time frame for the reverse auction (e.g., from start to end), whether there are any pre-approved bidders, etc. (Step 606). This description/introduction may include any requirements, preferences, and/or conditions precedent to service the buyer has regarding the auction subject, such as, for example, the time frame needed for delivery and/or completion of the good(s) and/or service(s), the total number of products or services requested, the quality needed (e.g., specifying any applicable standards or reference materials in a particular industry pertaining to quality, referring to exemplary photographs, dimensions, etc). The buyer may also indicate any requirements of the bidders themselves and who is qualified to bid. Such requirements may include, for example, fluency in a particular language, prior experience level, equipment requirements, licenses, skill level, citizenship, geographic location, etc. The system may be configured to enable questions and answers between a buyer and bidders before the reverse auction starts, and may make such questions and answers public to all auction participants via the computing devices. The buyer should provide any auction subject details needed to clarify or avoid confusion as to the requirements of the auction subject. The system can allow the buyer to preset the timeframe for the reverse auction and track the reverse auction until the end or close thereof.

The buyer can then establish predetermined rules for the auction, such as, for example, the price-protection fee, the predetermined percentage, setting a reserve price, deciding who will receive the price-protection fee, etc. (Step 608). The buyer can also specify whether the reverse auction will involve a good/service that will involve one or more transfers of ownership (Step 610). If the reverse auction will involve a transfer of ownership (Yes, Step 610), then the buyer intends to buy rather than share possession rights of the auctioned subject (Step 612). If the reverse auction does not involve a transfer of ownership (No, Step 610), then the buyer intends to share possession rights for the auctioned subject for a specified period of time (Step 614).

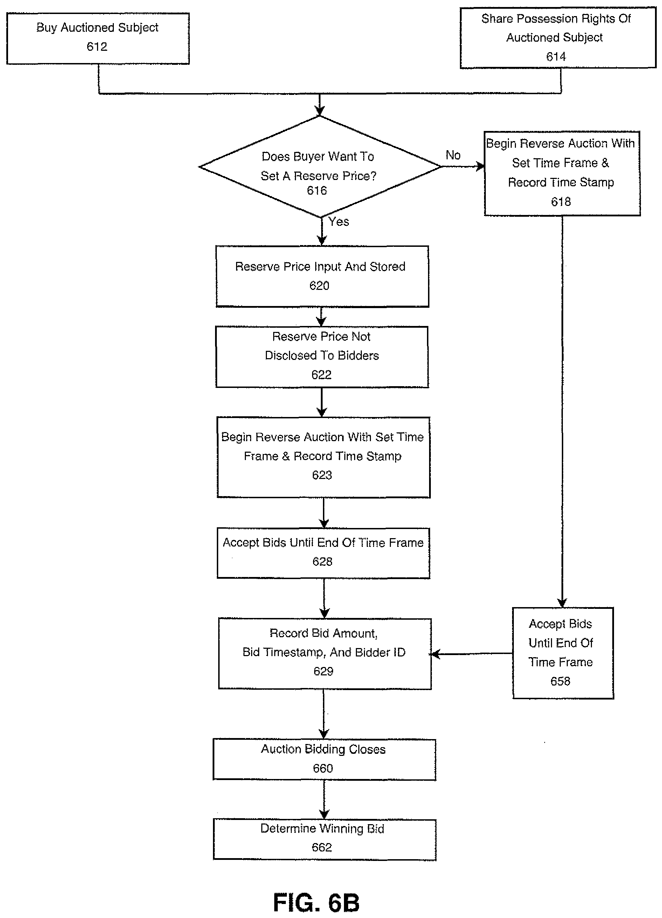

As shown in FIG. 6B, once the buyer decides whether the auction subject will involve a transfer of ownership (Steps 610, 612, 614), the buyer may be prompted to set up a reserve price (Step 616). The reserve price is preferably the maximum amount that the buyer is willing to pay for the auction subject. In one embodiment, the reserve price is preset by the buyer and is not disclosed to any potential or actual bidders. In other embodiments, the reserve price may be disclosed to bidders before, during, or after the end of the reverse auction. The reserve price is set by the buyer at his/her discretion. In preferred embodiments, if the final amount of the winning bid.

The reserve price is preferably a maximum price, hidden (or closed) from bidders, representing the most a buyer is willing to pay for an auctioned good/service (i.e., an auction subject). In a reserve price reverse auction, the buyer is only obligated to buy the good/service if the winning bid amount is at or below the reserve price. It will be appreciated that a downside of a hidden reserve price is that a failed reverse auction may occur more frequently because the bidder-sellers may bid too high relative to the reserve price. Setting a hidden reserve price is preferably at the buyer's discretion, but may be automatically preset by the system by, for example, determining automatically a fair market value for the good/service being sought. In these embodiments, the bidders are not aware of the maximum amount a buyer is willing to pay for the auction subject. Such embodiments can offer a bottom up bidding approach in that they encourage bidders to bid up from a start auction price irrespective of the hidden reserve price meaning that the bidding amount can be higher or lower than the reserve price. In alternative embodiments, the reserve price may be conditionally hidden at the buyer's discretion. A conditional hidden reserve price auction as contemplated herein is one in which the system allows the buyer to optionally terminate the reverse auction early as soon as at least one bid is at or below the reserve price. The system can alternatively allow the bids to be accepted by a buyer even if the they are not equal to or below the conditional hidden reserve price set by the buyer.

Alternatively, a buyer may choose to use an open reserve price, which is a reserve price that is visible to the bidders during the reverse auction. In these embodiments, the bidders are aware of the maximum amount a buyer is willing to pay for the auction subject and offers a top down bidding approach in that it requires the bidders to bid down from the known reserve price, or to not participate in the auction at all. Such an open reserve auction may benefit savvy bidders in situations where a less savvy buyer sets a reserve price much higher than a market value for a particular good/service. Therefore, it will be appreciated that having an open versus hidden reserve auction has both pros and cons to the buyer and bidders. While having an open reserve auction will likely ensure that an auction does not fail even if there is only one bidder, it leaves open the possibility for savvy bidders to take advantage of less savvy buyers. For the bidders, an open reserve auction it enables them to offer bids that they know will be at an amount that the buyer may accept. It is also contemplated that the system may allow the bids to be accepted even if the they are above the hidden reserve price set by the buyer.

In preferred embodiments, the reserve price is not used for recalculation, even if only a single bid is received below it. For example, if the winning bid is below the reserve price and the next lowest bid is above the reserve price, then the recalculation is preferably still based on the winning bid and the next lowest bid. However, the reserve price may be used as the next lowest bid for recalculation purposes if the winning bid is below it and no other bids are received which are greater than the winning bid.

The buyer may also be prompted to input a start price for the auction. The start price is a pre-set amount which serves as a means for getting the reverse auction bidding started. It is open to (or visible by) the bidder-sellers, and may represent a maximum amount the buyer is willing to pay for the auctioned subject. A nominal price may be used as the start price to begin the bidding at an auction. As the buyer desires a low price, the start price might not have any relationship at all to the buyer's actual perceived value of the auction subject, and the winning bid may be above, below, or equal to the start price.

If the buyer chooses not to set up a reserve price (No, Step 616), then he/she may be prompted to set up the time frame for the reverse auction, including the start time and the end time and any other parameters for the auction (Step 618). The system can record a timestamp for the reverse auction listing with the unique index number to identify different listings. Once the time frame begins, the system then accepts bids (Step 658) until the timeframe ends and the reverse auction closes (Step 660). The system then records timestamps for bids received during the auction time frame (Step 629). Once the reverse auction closes, the system processes all of the accepted bids, the auction ends (Step 660), and the system determines the winning bid (Step 662).

If the buyer does set up a reserve price (Yes, Step 616), then the buyer may be prompted to input a reserve price that is stored in the database (Step 620), which, in preferred embodiments, the reserve amount is not disclosed to bidders even though the bidders are made aware of the existence of a hidden reserve price at the beginning of the auction in order to avoid any confusion (Step 622). The system then begins the reverse auction with a set time frame and records a time stamp for the auction beginning (Step 623), starts accepting bids from bidders (Step 628), and records timestamps for bids received during the auction time frame (Step 629). Before the reverse auction request is officially listed in the online auction platform, the system can issue an index number for each listed reverse auction request or auctioned subject, and can issue or record a timestamp corresponding to the start time of the reverse auction. If at the close of the auction the reserve price is exceeded by all of the bids, then the reverse auction is subject to potential termination depending on terms preset by the buyer. The system continues to accept bids from bidders until the reverse auction closes or ends (Step 660). Once the reverse auction closes, the system processes all of the bids received to select or determine the winning bid (Step 662), and checks to see if the winning bids exceed the reserve price.

As shown in FIG. 6C, once bids have been accepted by the system and the auction closes or ends (Step 660, FIG. 6B), the system selects or determines the winning bid (Step 662). The winning bid selected will preferably be the lowest bid received, but can be preset by the buyer in advance of the auction in the form of a ranking (e.g., the winning bid may be set as the second lowest bid, or the third lowest bid, and so on). The system, buyer, or a third-party may establish, before a start of the auction and based on a set of predetermined rules, a ranking corresponding to which bid of the sealed bids will be selected as the winning bid (i.e., the winning bid will correspond to the lowest bid, the second lowest bid, the third lowest bid, the fourth lowest bid, the fifth lowest bid, or any other designated ranking). For example, the buyer may want a bid other than the lowest bid to win, and can indicate this in the auction request he/she submits to the system. As discussed above, the winning bid is subject to change depending on whether it is a Category 1 bid or a Category 2 bid. Therefore, the system determines whether the winning bid is a Category 1 or Category 2 bid (Step 664). If the winning bid is a Category 1 bid (Step 666), then the bidder-seller is entitled to provide the auction subject to the buyer for the winning bid amount (Step 668) and the reverse auction is completed (Step 684). In other embodiments, the ranking corresponding to which bid of the one or more sealed bids selected as the winning bid can be established by the system by default.

If the winning bidder is determined to be a Category 2 bidder (Step 664, 670), then the system computes the final recalculated price using the price-protection formula (Step 672). The price-protection formula calculation (Step 674) is performed by subtracting the price-protection fee (Step 676) from the sum of (i) the lowest bid amount (the Winning Bid) (Step 678) and (ii) a predetermined percentage of the difference between the winning bid amount and the next-lowest bid amount (Step 680). The price-protection fee in a preferred embodiment is a percentage of the winning bid amount. In this manner, the winning Category 2 bidder-seller will be entitled to provide the auction subject for an amount equal to the sum of his/her lowest winning bid and a percentage of the difference between his/her lowest winning bid and the next lowest bid, less a percentage of his/her lowest winning bid (Step 682).

Once the reverse auction is complete (Step 684), the winning Category 2 bidder provides the auction subject for the final recalculated amount plus applicable additional costs, if any (Step 686). The buyer then pays for the auctioned subject (Step 688), which can be done before or after the bidder-seller provides the auction subject. Optionally, both parties can then rate one another (Step 690) and the overall transaction ends.

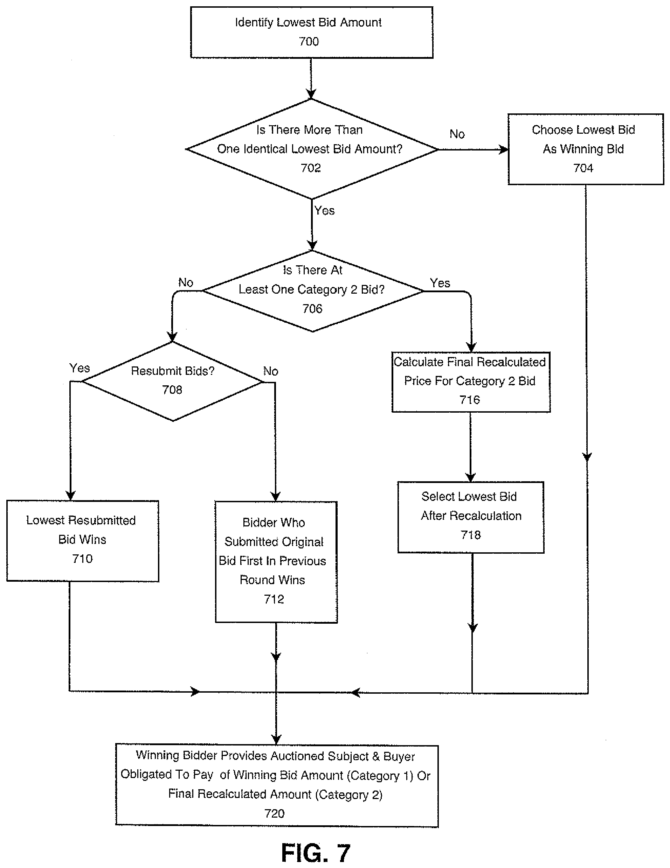

In a reverse auction, it is possible for there to be more than one identical winning bids at the close of the reverse auction. Referring to FIG. 7, shown is a flowchart depicting a process of determining the final winning bidder when there are more than one identical lowest winning bids from more than one bidder in the same or different categories. As shown, in a preferred embodiment, after the reverse auction closes, the system identifies the lowest bid amount (Step 700), and determines whether there are more than one identical bids at this lowest bid amount (Step 702). If there are no identical lowest bid amounts (No, Step 702), then the system chooses the lowest bid as the winning bid (Step 704). However, if the buyer desires a different ranking to be the winning bid in advance of the reverse auction (e.g., second lowest, third lowest, etc.), then he/she can input this setting in advance of the reverse auction, and the system can select the appropriate winning bid.

If there are two or more identical bids for the winning bid amount (Yes, Step 702), then the system can determine whether at least one of the two or more identical bids for the winning bid amount is a Category 2 bid (Step 706). If, for example, two or more identical bids for the lowest bid amount are from bidders of same category (Yes, Step 706) or remain the same bid amount after recalculation, then the system can prompt the bidders to re-submit the bids (Step 708) within a predetermined timeframe. If the bidders re-submit bids (Yes, Step 708), then the lowest re-submitted bid wins the reverse auction (Step 710). If the bidders re-submit identical bids again, the process can repeat itself until it determines a lowest re-submitted bid. Alternatively, the system may determine a maximum number of re-submissions allowed before canceling the auction or determining the first bidder to have submitted the initial bid to be the winning bid.

If the bidders choose not to re-submit the bids (No, Step 708) within the predetermined timeframe, then the bidder who was first to submit the original bid in the previous round first wins (Step 712). If the bids for identical amounts are in different categories (No, Step 706), then the system can calculate a final recalculated price (Step 716) for the Category 2 bid(s). In this embodiment, the bidder whose bid is the lowest following all final recalculations wins the reverse auction (Step 718). In an alternative embodiment, a comparison between a final recalculated price of a potential winning Category 2 bid and a lowest one of the Category 1 bids may be made to determine a final winning bid. Once the winning bid, and by extension, the winning bidder, are selected, the winning bidder can provide the auction subject to the buyer, and the buyer is obligated to pay the winning bidder the final amount of the winning bid (Step 720). The Category 1 bids do not undergo recalculation.

It will also be appreciated that certain sealed bid reverse online auctions may not sufficiently attract enough bidders to participate even if incentives are provided. Occasionally, only one bidder may bid in such a reverse auction. In these scenarios, even if the single bidder classified himself/herself as a Category 2 bidder, he/she may be considered a Category 1 bidder by the system. That is, if there is a sole bidder, then there is nothing to protect because the bidder is not competing against any other bidders, and will win the reverse auction so long as the bid is at or below any maximum reserve price. Alternatively, the system may be configured to allow the sole bidder to remain a Category 2 bidder and the reserve price may be used as the next lowest bid for recalculation purposes or the auction can be deemed a failure based on predetermined rules.

Preferably, upon closing of the reverse auction, only a winning Category 2 bidder is required to pay the Price-Protection Fee Percentage or allocate and split the price-protection fee based on predetermined rules, such as allocating at least a portion to the buyer, one or more bidders, the system, or a third-party. However, as discussed above, in other embodiments, all Category 2 bidders may be required to pay the Price-Protection Fee Percentage. As discussed above with respect to FIG. 5C, the buyer may be given the option of splitting the amount of the Price-Protection Fee received from the Winning Bidder among one or more of the losing Category 2 bidders, or keeping all or a portion of it to himself/herself or giving all of it to the next lowest bidder, among other scenarios. Optionally, all bidders are informed of how the Price-Protection Fee will be split prior to the start of the reverse auction. It will be appreciated that this fee can be used to encourage bidder participation, especially in embodiments in which the fee is distributed among all or some of the losing bidders. Optionally, the buyer gives at least a portion of the fee to one or more participating bidders, or split all of the fee with at least one participating bidder, or split all of the fee with multiple or all participating bidders. Such embodiments constitute a "get paid to play" model whereby losing bidders will always collect something, such as a portion of the price-protection fee, from the winning bidder. In a preferred embodiment, as the Winning Bidder has already won the reverse auction, he/she would not get back any portion of the Price-Protection Fee Percentage he/she pays out. In an alternative embodiment, the Winning Bidder may get back all of the fee. In such an embodiment, the bidders are being enticed to submit the lowest possible bid they can, while also being encouraged to buy as much price-protection as possible.

The systems and methods described herein may be executed on a computing device and/or computer system, generally comprised of a central processing unit (CPU) that is operatively connected to a memory device, data input and output circuitry (IO) and computer data network communication circuitry. Computer code executed by the CPU can take data received by the data communication circuitry and store it in the memory device. In addition, the CPU can take data from the I/O circuitry and store it in the memory device. Further, the CPU can take data from a memory device and output it through the IO circuitry or the data communication circuitry. The data stored in memory may be further recalled from the memory device, further processed or modified by the CPU in the manner described herein and restored in the same memory device or a different memory device operatively connected to the CPU, including by means of the data network circuitry. The memory device can be any kind of data storage circuit or magnetic storage or optical device, including a hard disk, optical disk or solid-state memory. Examples of well-known computing systems, environments, and/or configurations that may be suitable for use with the invention include, but are not limited to, personal computers, server computers, hand-held, laptop or mobile computer or communications devices such as cell phones and PDA's, multiprocessor systems, microprocessor-based systems, set top boxes, programmable consumer electronics, network PCs, minicomputers, mainframe computers, distributed computing environments that include any of the above systems or devices, and the like.

Computer program logic implementing all or part of the functionality previously described herein may be embodied in various forms, including, but in no way limited to, source code, computer executable, and various intermediate forms (e.g., forms generated by an assembler, compiler, linker, or locator). Source code may include a series of computer program instructions implemented in any of various programming languages (e.g., an object code, an assembly language, or a high-level language such as FORTRAN, C, C++, JAVA, or HTML) for use with various operating systems or operating environments. The source code may define and use various data structures and communication messages and may be in computer executable form (e.g., via an interpreter), or may be converted (e.g., via a translator, assembler, or compiler) into computer executable form.

The invention may be described in the general context of computer-executable instructions, such as program modules, being executed by a computer. Program modules include routines, programs, objects, components, data structures, etc., that perform particular tasks or implement particular data types. The computer program and data may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed hard disk), an optical memory device (e.g., a CD-ROM or DVD), a PC card (e.g., PCMCIA card), or other memory device, in any form in a signal that is transmittable to a computer using any of various communication technologies (e.g., analog technologies, digital technologies, optical technologies, wireless technologies, networking technologies, and internetworking technologies).

The invention may also be practiced in distributed computing environments where tasks are performed by remote processing devices that are linked through a communications network, and where program modules may be located in both local and remote computer storage media including memory storage devices. Practitioners of ordinary skill will recognize that the invention may be executed on one or more computer processors that are linked using a data network, including, for example, the Internet. Different steps of the process can be executed by one or more computers and storage devices geographically separated by connected by a data network in a manner so that they operate together to execute the process steps. A user's computer can run an application that causes the user's computer to transmit a stream of one or more data packets across a data network to a second computer, referred to here as a server. The server, in turn, may be connected to one or more mass data storage devices where the database is stored.

The server can execute a program that receives the transmitted packet and interpret the transmitted data packets in order to extract database query information. The server can then execute the remaining steps of the invention by means of accessing the mass storage devices to derive the desired result of the query. Alternatively, the server can transmit the query information to another computer that is connected to the mass storage devices, and that computer can execute the invention to derive the desired result. The result can then be transmitted back to the user's computer by means of another stream of one or more data packets appropriately addressed to the user's computer.

In order for users to participate in the online reverse auctions, they must register for an account with the system. As mentioned above, before registration is completed, a user can be presented with a user agreement with the relevant rules preset for all sellers and buyers prior to a reverse auction. Personal information collected may include, but is not limited to, name address, email, phone number, and financial information required to complete the registration process. A valid email and/or a valid phone number may be used for verification purposes by the system administrator. Exemplary embodiments of the system will allow each user to register only one account associated with one username by a valid email and/or phone number. An account may be used to either bid on or list a reverse auction. By only allowing one account per user, the system can help prevent fraud. The system can also require a genuine name, a genuine address and genuine financial information to fully register a user. Financial information required may include, but is not limited to, a debit card, a credit card, third-party payment systems, bank routing numbers, etc.

The term "system" herein refers to implementation through a combination of hardware and software that operates a portable computing device, which comprises various pre-programmed features combined and integrated with basic components including but not limited to one or more servers, databases, mobile end applications, web portals, network settings, etc. With the support of these components, the system provides the services through user interfaces, such as a website or a mobile application. In addition, the system may have more than one server that may be in a distributed structure with support from data centers that may be located anywhere around the world. These implementations may be communicatively linked and cross-platformed so that a user on a computing device may be provided with the relevant information. Features of the system can be implemented through computing devices that allows steps of the method to be processed and output by a processor.

Notifications may be sent by the system through the server to both buyer-computing devices and/or bidder-computing devices through emails, instant messages, voice messages, etc. when necessary to alert them of different occurrences, including but not limited to successfully submitted bids, relevant auction time frames, rejected bids, reverse auction wins, auction results, etc. The systems described herein are used to provide a platform to facilitate at least one or multi-sided matching reverse auction markets, where bidders may simultaneously bid on reverse auctions from one or multiple buyers and buyers may solicit to one or multiple bidders. Each transaction may be facilitated against a fee or commission. The system or the platform may charge a predetermined percentage of service fees for providing auction services.

## Claims

1. A computer-implemented system for conducting a sealed bid online reverse auction, said system comprising:
a computing system having one or more processors configured to provide an online platform for remotely conducting a sealed bid online reverse auction;
a buyer computing device and at least one bidder computing device, each configured to communicate with said computing system over a network;
one or more non-transitory computer readable program storage medium capable of storing instructions to instruct said one or more processors to perform said auction in accordance with a set of predetermined rules, wherein said one or more processors are configured to:
receive, from said buyer computing device, an auction request for an auction subject in said auction;
receive, from said at least one bidder computing device, one or more sealed bids each specifying a bid amount for said auction subject, wherein at least one of said one or more sealed bids is a bid associated with a commitment to pay a price-protection fee;
assign an anonymous identifier to each of said one or more sealed bids automatically;
transmit, during said auction, to one or more of said at least one bidder computing device, a first representation of said auction including one or more of said anonymous identifiers, wherein said first representation does not include said bid amount, and wherein said at least one bidder computing device displays at least a portion of information related to said first representation;
determine a winning bid from said received one or more sealed bids, wherein upon said winning bid being associated with said commitment to pay said price-protection fee:
apply said set of predetermined rules to said specified bid amount of said winning bid to calculate said price-protection fee;
determine a designated bid of said received one or more sealed bids relative to said winning bid;
compute a difference between said amount of said winning bid and an amount of said designated bid;
apply said set of predetermined rules to said difference to calculate an adjustment amount;
compute, based on a closing of said auction, a recalculated winning bid amount based on a formula applying at least one of said adjustment amount or said price-protection fee to said amount of said winning bid;
transmit, after said closing of said auction, to one or more of said at least one bidder computing device, a second representation of said auction, wherein said second representation includes at least said recalculated winning bid amount associated with said winning bid corresponding to at least one said anonymous identifier, wherein said at least one bidder computing device displays at least a portion of information related to said second representation; and
allocate at least a portion of said price-protection fee for distribution in accordance with said set of predetermined rules.

2. The system according to claim 1, wherein said recalculated winning bid amount is computed in accordance with said formula, wherein said formula is a sum of said amount of said winning bid and said adjustment amount.

3. The system according to claim 1, wherein said formula includes subtracting said price-protection fee from said sum of said amount of said winning bid and said adjustment amount.

4. The system according to claim 1, wherein said one or more processors are further configured to:
provide at least one bidder with an option to select a bidding category from one of a category one or a category two;
wherein a category one bidder is a bidder providing a category one bid and upon winning said auction gets paid a winning bid amount equal to said bid amount of said category one bid; or
wherein a category two bidder is a bidder providing a category two bid associated with said commitment to pay said price-protection fee, and upon winning said auction, gets paid said recalculated winning bid amount based on said formula.

5. The system according to claim 4, wherein said category two bidder is required to pay said price-protection fee based on said predetermined rules.

6. The system according to claim 4, wherein said one or more processors are further configured to at least one of:
allow said category two bidder to change to said category one bidder at any time during
said auction or prior to a predetermined time prior to a closing of said auction; or allow said category one bidder to change to said category two bidder at any time during
said auction or prior to a predetermined time prior to a closing of said auction; or prevent said category two bidder from changing to said category one bidder at any time
during said auction or within a predetermined time frame prior to a closing of said auction;
prevent said category one bidder from changing to said category two bidder at any time during said auction or within a predetermined time frame prior to a closing of said auction;
allow at least one of:
said category one bidder to change said category one bid amount, or
said category two bidder to change said category two bid amount; or
prevent at least one of:
said category one bidder from changing said category one bid amount, or
said category two bidder from changing said category two bid amount.

7. The system according to claim 1, wherein said designated bid is, relative to said winning bid, one of said next lowest bid, said second to next lowest bid, said third to next lowest bid, said fourth to next lowest bid, or any other bid among said received one or more sealed bids specifying a bid amount which is higher than said specified bid amount of said winning bid.

8. The system according to claim 7, wherein said designated bid is said next lowest bid relative to said winning bid.

9. The system according to claim 1, wherein said one or more processors are further configured to:
enable at least one of a buyer, a bidder, said system by default, or a third-party to establish said set of predetermined rules for allocating at least a portion of said price-protection fee.

10. The system according to claim 1, wherein said at least a portion of said price-protection fee is allocated to at least one of:
(i) a buyer;
(ii) said computing system;
(iii) a bidder of said winning bid;
(iv) at least one bidder that is not a winning bidder;
(v) a third-party; or
(vi) a user registered to said system, and
wherein said price-protection fee includes at least one of a fixed amount or a predetermined percentage of said specified bid amount of said winning bid.

11. The system according to claim 10, wherein said one or more processors are further configured to:
enable said buyer, said computing system, or said third-party to contribute an additional fee for allocation in addition to said price-protection fee.

12. The system according to claim 1, wherein said set of predetermined rules includes a first predetermined percentage correlated with a second predetermined percentage, and
wherein said first predetermined percentage is a percentage applied to said amount of said winning bid to calculate said price-protection fee and said second predetermined percentage is a percentage applied to said difference to calculate said adjustment amount.

13. The system according to claim 12, wherein at least one of: a buyer, said system by default, a third-party, or at least one bidder of said auction subject prior to bidding on said auction subject, based on said predetermined rules, establishes said first predetermined percentage or said second predetermined percentage.

14. The system according to claim 1, wherein one or more of said first predetermined percentage, said second predetermined percentage, and said difference are correlated based on at least one of:
(i) said first predetermined percentage increases as said second predetermined percentage increases;
(ii) said first predetermined percentage increases as said second predetermined percentage decreases;
(iii) said first predetermined percentage decreases as said second predetermined percentage increases;
(iv) said first predetermined percentage decreases as said second predetermined percentage decreases;
(v) said second predetermined percentage decreases as said difference increases;
(vi) said second predetermined percentage decreases as said difference decreases;
(vii) said second predetermined percentage increases as said difference decreases; or
(viii) said second predetermined percentage increases as said difference increases.

15. The system according to claim 1, wherein said one or more processors are further configured to:
prevent withdrawal of said one or more sealed bids from said auction within a predetermined time period prior to said closing of said auction or;
prevent submission of one or more new sealed bids in said auction within a predetermined time period prior to said closing of said auction.

## Patentansprüche

1. Computerimplementiertes System zur Durchführung einer Online-Rückwärtsauktion mit verdeckten Geboten, wobei das System umfasst:
ein Computersystem mit einem oder mehreren Prozessoren, die dazu konfiguriert sind, eine Online-Plattform zur entfernten Durchführung einer Online-Rückwärtsauktion mit verdeckten Geboten bereitzustellen;
eine Käufer-Rechenvorrichtung und mindestens eine Bieter-Rechenvorrichtung, die jeweils dazu konfiguriert sind, über ein Netzwerk mit dem Computersystem zu kommunizieren;
ein oder mehrere nichtflüchtige computerlesbare Programmspeichermedien, die dazu geeignet sind, Anweisungen zu speichern, um den einen oder die mehreren Prozessoren anzuweisen, die Auktion gemäß einem Satz vorbestimmter Regeln durchzuführen, wobei der eine oder die mehreren Prozessoren dazu konfiguriert sind:
von der Käufer-Rechenvorrichtung eine Auktionsanfrage für einen Auktionsgegenstand in der Auktion zu empfangen;
von der mindestens einen Bieter-Rechenvorrichtung ein oder mehrere verdeckte Gebote zu empfangen, von denen jedes einen Gebotsbetrag für den Auktionsgegenstand angibt, wobei mindestens eines der einen oder mehreren verdeckten Gebote ein Gebot ist, das mit einer Verpflichtung zur Zahlung einer Preisschutzgebühr verbunden ist;
jedem der einen oder mehreren verdeckten Gebote automatisch eine anonyme Kennung zuzuweisen;
während der Auktion an eine oder mehrere der mindestens einen Bieter-Rechenvorrichtung eine erste Darstellung der Auktion zu übertragen, die eine oder mehrere der anonymen Kennungen enthält, wobei die erste Darstellung den Gebotsbetrag nicht enthält und wobei die mindestens eine Bieter-Rechenvorrichtung mindestens einen Teil der Informationen anzeigt, die sich auf die erste Darstellung beziehen;
aus den empfangenen einen oder mehreren verdeckten Geboten ein Gewinnergebot zu bestimmen, wobei, wenn das Gewinnergebot mit der Verpflichtung zur Zahlung der Preisschutzgebühr verbunden ist:
der Satz vorbestimmter Regeln auf den angegebenen Gebotsbetrag des Gewinnergebots angewendet wird, um die Preisschutzgebühr zu berechnen;
ein bestimmtes Gebot aus den empfangenen einen oder mehreren verdeckten Geboten relativ zu dem Gewinnergebot bestimmt wird;
eine Differenz zwischen dem Betrag des Gewinnergebots und einem Betrag des bestimmten Gebots berechnet wird;
der Satz vorbestimmter Regeln auf die Differenz angewendet wird, um einen Anpassungsbetrag zu berechnen;
auf Grundlage des Abschlusses der Auktion ein neu berechneter Betrag des Gewinnergebots anhand einer Formel berechnet wird, die mindestens einen von dem Anpassungsbetrag und der Preisschutzgebühr auf den Betrag des Gewinnergebots anwendet;
nach Abschluss der Auktion an eine oder mehrere der mindestens einen Bieter-Rechenvorrichtung eine zweite Darstellung der Auktion übertragen wird, wobei die zweite Darstellung mindestens den neu berechneten Betrag des Gewinnergebots enthält, der dem Gewinnergebot zugeordnet ist, das mindestens einer der anonymen Kennungen entspricht, wobei die mindestens eine Bieter-Rechenvorrichtung mindestens einen Teil der Informationen anzeigt, die sich auf die zweite Darstellung beziehen; und
mindestens ein Teil der Preisschutzgebühr zur Verteilung gemäß dem Satz vorbestimmter Regeln zugewiesen wird.

2. System nach Anspruch 1, wobei der neu berechnete Betrag des Gewinnergebots gemäß der Formel berechnet wird, wobei die Formel eine Summe aus dem Betrag des Gewinnergebots und dem Anpassungsbetrag ist.

3. System nach Anspruch 1, wobei die Formel das Subtrahieren der Preisschutzgebühr von der Summe aus dem Betrag des Gewinnergebots und dem Anpassungsbetrag umfasst.

4. System nach Anspruch 1, wobei der eine oder die mehreren Prozessoren ferner dazu konfiguriert sind:
mindestens einem Bieter eine Option bereitzustellen, eine Gebotskategorie aus einer Kategorie eins oder einer Kategorie zwei auszuwählen;
wobei ein Bieter der Kategorie eins ein Bieter ist, der ein Gebot der Kategorie eins abgibt und bei Gewinn der Auktion einen Betrag des Gewinnergebots erhält, der dem Gebotsbetrag des Gebots der Kategorie eins entspricht; oder
wobei ein Bieter der Kategorie zwei ein Bieter ist, der ein Gebot der Kategorie zwei abgibt, das mit der Verpflichtung zur Zahlung der Preisschutzgebühr verbunden ist, und bei Gewinn der Auktion den anhand der Formel neu berechneten Betrag des Gewinnergebots erhält.

5. System nach Anspruch 4, wobei der Bieter der Kategorie zwei verpflichtet ist, die Preisschutzgebühr auf Grundlage der vorbestimmten Regeln zu zahlen.

6. System nach Anspruch 4, wobei der eine oder die mehreren Prozessoren ferner für mindestens eines der Folgenden konfiguriert sind:
dem Bieter der Kategorie zwei zu gestatten, jederzeit während der Auktion oder bis zu einem vorbestimmten Zeitpunkt vor dem Abschluss der Auktion zu einem Bieter der Kategorie eins zu wechseln; oder
dem Bieter der Kategorie eins zu gestatten, jederzeit während der Auktion oder bis zu einem vorbestimmten Zeitpunkt vor dem Abschluss der Auktion zu einem Bieter der Kategorie zwei zu wechseln; oder
zu verhindern, dass der Bieter der Kategorie zwei jederzeit während der Auktion oder innerhalb eines vorbestimmten Zeitraums vor dem Abschluss der Auktion zu einem Bieter der Kategorie eins wechselt;
zu verhindern, dass der Bieter der Kategorie eins jederzeit während der Auktion oder innerhalb eines vorbestimmten Zeitraums vor dem Abschluss der Auktion zu einem Bieter der Kategorie zwei wechselt;
mindestens eines der Folgenden zu gestatten:
dem Bieter der Kategorie eins zu gestatten, den Gebotsbetrag der Kategorie eins zu ändern, oder
dem Bieter der Kategorie zwei zu gestatten, den Gebotsbetrag der Kategorie zwei zu ändern; oder
mindestens eines der Folgenden zu verhindern:
dass der Bieter der Kategorie eins den Gebotsbetrag der Kategorie eins ändert, oder
dass der Bieter der Kategorie zwei den Gebotsbetrag der Kategorie zwei ändert.

7. System nach Anspruch 1, wobei das bestimmte Gebot relativ zu dem Gewinnergebot eines der folgenden ist: das nächstniedrigste Gebot, das zweitnächstniedrigste Gebot, das drittnächstniedrigste Gebot, das viertnächstniedrigste Gebot oder ein beliebiges anderes Gebot unter den empfangenen einen oder mehreren verdeckten Geboten, das einen Gebotsbetrag angibt, der höher ist als der angegebene Gebotsbetrag des Gewinnergebots.

8. System nach Anspruch 7, wobei das bestimmte Gebot relativ zu dem Gewinnergebot das nächstniedrigste Gebot ist.

9. System nach Anspruch 1, wobei der eine oder die mehreren Prozessoren ferner dazu konfiguriert sind:
mindestens einem von einem Käufer, einem Bieter, dem System standardmäßig oder einem Dritten zu ermöglichen, den Satz vorbestimmter Regeln zur Zuweisung mindestens eines Teils der Preisschutzgebühr festzulegen.

10. System nach Anspruch 1, wobei mindestens ein Teil der Preisschutzgebühr mindestens einem der Folgenden zugewiesen wird:
(i) einem Käufer;
(ii) dem Computersystem;
(iii) einem Bieter des Gewinnergebots;
(iv) mindestens einem Bieter, der kein Gewinner ist;
(v) einem Dritten; oder
(vi) einem bei dem System registrierten Benutzer,
und wobei die Preisschutzgebühr mindestens eines von einem festen Betrag oder einem vorbestimmten Prozentsatz des angegebenen Gebotsbetrags des Gewinnergebots umfasst.

11. System nach Anspruch 10, wobei der eine oder die mehreren Prozessoren ferner dazu konfiguriert sind:
dem Käufer, dem Computersystem oder dem Dritten zu ermöglichen, zusätzlich zu der Preisschutzgebühr eine zusätzliche Gebühr zur Zuweisung beizutragen.

12. System nach Anspruch 1, wobei der Satz vorbestimmter Regeln einen ersten vorbestimmten Prozentsatz umfasst, der mit einem zweiten vorbestimmten Prozentsatz korreliert ist, und
wobei der erste vorbestimmte Prozentsatz ein Prozentsatz ist, der auf den Betrag des Gewinnergebots angewendet wird, um die Preisschutzgebühr zu berechnen, und der zweite vorbestimmte Prozentsatz ein Prozentsatz ist, der auf die Differenz angewendet wird, um den Anpassungsbetrag zu berechnen.

13. System nach Anspruch 12, wobei mindestens einer von: einem Käufer, dem System standardmäßig, einem Dritten oder mindestens einem Bieter für den Auktionsgegenstand vor Abgabe eines Gebots auf den Auktionsgegenstand, auf Grundlage der vorbestimmten Regeln den ersten vorbestimmten Prozentsatz oder den zweiten vorbestimmten Prozentsatz festlegt.

14. System nach Anspruch 1, wobei einer oder mehrere von dem ersten vorbestimmten Prozentsatz, dem zweiten vorbestimmten Prozentsatz und der Differenz auf Grundlage mindestens einer der folgenden Beziehungen korreliert sind:
(i) der erste vorbestimmte Prozentsatz steigt, wenn der zweite vorbestimmte Prozentsatz steigt;
(ii) der erste vorbestimmte Prozentsatz steigt, wenn der zweite vorbestimmte Prozentsatz sinkt;
(iii) der erste vorbestimmte Prozentsatz sinkt, wenn der zweite vorbestimmte Prozentsatz steigt;
(iv) der erste vorbestimmte Prozentsatz sinkt, wenn der zweite vorbestimmte Prozentsatz sinkt;
(v) der zweite vorbestimmte Prozentsatz sinkt, wenn die Differenz steigt;
(vi) der zweite vorbestimmte Prozentsatz sinkt, wenn die Differenz sinkt;
(vii) der zweite vorbestimmte Prozentsatz steigt, wenn die Differenz sinkt; oder
(viii) der zweite vorbestimmte Prozentsatz steigt, wenn die Differenz steigt.

15. System nach Anspruch 1, wobei der eine oder die mehreren Prozessoren ferner dazu konfiguriert sind:
das Zurückziehen eines oder mehrerer verdeckter Gebote aus der Auktion innerhalb eines vorbestimmten Zeitraums vor dem Abschluss der Auktion zu verhindern; oder
die Abgabe eines oder mehrerer neuer verdeckter Gebote in der Auktion innerhalb eines vorbestimmten Zeitraums vor dem Abschluss der Auktion zu verhindern.

## Revendications

1. Un système mis en œuvre par ordinateur pour conduire une enchère inversée en ligne à offres scellées, ledit système comprenant :
un système informatique comportant un ou plusieurs processeurs configurés pour fournir une plateforme en ligne permettant de conduire à distance une enchère inversée en ligne à offres scellées ;
un dispositif informatique d'acheteur et au moins un dispositif informatique de soumissionnaire, chacun étant configuré pour communiquer avec ledit système informatique par l'intermédiaire d'un réseau ;
un ou plusieurs supports de stockage de programme non transitoires lisibles par ordinateur, aptes à stocker des instructions destinées à amener lesdits un ou plusieurs processeurs à exécuter ladite enchère conformément à un ensemble de règles prédéterminées, dans lequel lesdits un ou plusieurs processeurs sont configurés pour :
recevoir, dudit dispositif informatique d'acheteur, une demande d'enchère pour un objet d'enchère dans ladite enchère ;
recevoir, dudit au moins un dispositif informatique de soumissionnaire, une ou plusieurs offres scellées spécifiant chacune un montant d'offre pour ledit objet d'enchère, dans lequel au moins l'une desdites une ou plusieurs offres scellées est une offre associée à un engagement de payer des frais de protection du prix ;
attribuer automatiquement un identifiant anonyme à chacune desdites une ou plusieurs offres scellées ;
transmettre, pendant ladite enchère, à un ou plusieurs desdits au moins un dispositif informatique de soumissionnaire, une première représentation de ladite enchère comprenant un ou plusieurs desdits identifiants anonymes, dans lequel ladite première représentation ne comprend pas ledit montant d'offre, et dans lequel ledit au moins un dispositif informatique de soumissionnaire affiche au moins une partie d'informations relatives à ladite première représentation ;
déterminer une offre gagnante parmi lesdites une ou plusieurs offres scellées reçues, dans lequel, lorsque ladite offre gagnante est associée audit engagement de payer lesdits frais de protection du prix :
appliquer ledit ensemble de règles prédéterminées audit montant d'offre spécifié de ladite offre gagnante afin de calculer lesdits frais de protection du prix ;
déterminer une offre désignée parmi lesdites une ou plusieurs offres scellées reçues par rapport à ladite offre gagnante ;
calculer une différence entre ledit montant de ladite offre gagnante et un montant de ladite offre désignée ;
appliquer ledit ensemble de règles prédéterminées à ladite différence afin de calculer un montant d'ajustement ;
calculer, sur la base d'une clôture de ladite enchère, un montant recalculé de l'offre gagnante sur la base d'une formule appliquant au moins l'un dudit montant d'ajustement ou desdits frais de protection du prix audit montant de ladite offre gagnante ;
transmettre, après ladite clôture de ladite enchère, à un ou plusieurs desdits au moins un dispositif informatique de soumissionnaire, une seconde représentation de ladite enchère, dans lequel ladite seconde représentation comprend au moins ledit montant recalculé de l'offre gagnante associé à ladite offre gagnante correspondant à au moins l'un desdits identifiants anonymes, dans lequel ledit au moins un dispositif informatique de soumissionnaire affiche au moins une partie d'informations relatives à ladite seconde représentation ; et
affecter au moins une partie desdits frais de protection du prix en vue d'une distribution conformément audit ensemble de règles prédéterminées.

2. Le système selon la revendication 1, dans lequel ledit montant recalculé de l'offre gagnante est calculé conformément à ladite formule, dans lequel ladite formule est une somme dudit montant de ladite offre gagnante et dudit montant d'ajustement.

3. Le système selon la revendication 1, dans lequel ladite formule comprend la soustraction desdits frais de protection du prix de ladite somme dudit montant de ladite offre gagnante et dudit montant d'ajustement.

4. Le système selon la revendication 1, dans lequel lesdits un ou plusieurs processeurs sont en outre configurés pour :
fournir à au moins un soumissionnaire une option permettant de sélectionner une catégorie d'offre parmi une catégorie un ou une catégorie deux ;
dans lequel un soumissionnaire de catégorie un est un soumissionnaire présentant une offre de catégorie un et, lorsqu'il remporte ladite enchère, reçoit un montant d'offre gagnante égal audit montant d'offre de ladite offre de catégorie un ; ou
dans lequel un soumissionnaire de catégorie deux est un soumissionnaire présentant une offre de catégorie deux associée audit engagement de payer lesdits frais de protection du prix et, lorsqu'il remporte ladite enchère, reçoit ledit montant recalculé de l'offre gagnante sur la base de ladite formule.

5. Le système selon la revendication 4, dans lequel ledit soumissionnaire de catégorie deux est tenu de payer lesdits frais de protection du prix sur la base desdites règles prédéterminées.

6. Le système selon la revendication 4, dans lequel lesdits un ou plusieurs processeurs sont en outre configurés pour au moins l'une des opérations suivantes :
permettre audit soumissionnaire de catégorie deux de passer à la catégorie de soumissionnaire de catégorie un à tout moment pendant ladite enchère ou avant un instant prédéterminé précédant la clôture de ladite enchère ; ou
permettre audit soumissionnaire de catégorie un de passer à la catégorie de soumissionnaire de catégorie deux à tout moment pendant ladite enchère ou avant un instant prédéterminé précédant la clôture de ladite enchère ; ou
empêcher ledit soumissionnaire de catégorie deux de passer à la catégorie de soumissionnaire de catégorie un à tout moment pendant ladite enchère ou pendant une période prédéterminée précédant la clôture de ladite enchère ;
empêcher ledit soumissionnaire de catégorie un de passer à la catégorie de soumissionnaire de catégorie deux à tout moment pendant ladite enchère ou pendant une période prédéterminée précédant la clôture de ladite enchère ;
permettre au moins l'une des opérations suivantes :
audit soumissionnaire de catégorie un de modifier ledit montant d'offre de catégorie un, ou
audit soumissionnaire de catégorie deux de modifier ledit montant d'offre de catégorie deux ; ou
empêcher au moins l'une des opérations suivantes :
ledit soumissionnaire de catégorie un de modifier ledit montant d'offre de catégorie un, ou
ledit soumissionnaire de catégorie deux de modifier ledit montant d'offre de catégorie deux.

7. Le système selon la revendication 1, dans lequel ladite offre désignée est, par rapport à ladite offre gagnante, l'une parmi l'offre immédiatement supérieure suivante, la deuxième offre supérieure suivante, la troisième offre supérieure suivante, la quatrième offre supérieure suivante, ou toute autre offre parmi lesdites une ou plusieurs offres scellées reçues spécifiant un montant d'offre supérieur audit montant d'offre spécifié de ladite offre gagnante.

8. Le système selon la revendication 7, dans lequel ladite offre désignée est ladite offre immédiatement supérieure suivante par rapport à ladite offre gagnante.

9. Le système selon la revendication 1, dans lequel lesdits un ou plusieurs processeurs sont en outre configurés pour :
permettre à au moins l'un parmi un acheteur, un soumissionnaire, ledit système par défaut ou un tiers d'établir ledit ensemble de règles prédéterminées pour l'affectation d'au moins une partie desdits frais de protection du prix.

10. Le système selon la revendication 1, dans lequel ladite au moins une partie desdits frais de protection du prix est affectée à au moins l'un parmi :
(i) un acheteur ;
(ii) ledit système informatique ;
(iii) un soumissionnaire de ladite offre gagnante ;
(iv) au moins un soumissionnaire qui n'est pas un soumissionnaire gagnant ;
(v) un tiers ; ou
(vi) un utilisateur enregistré auprès dudit système,
et dans lequel lesdits frais de protection du prix comprennent au moins l'un parmi un montant fixe ou un pourcentage prédéterminé dudit montant d'offre spécifié de ladite offre gagnante.

11. Le système selon la revendication 10, dans lequel lesdits un ou plusieurs processeurs sont en outre configurés pour :
permettre audit acheteur, audit système informatique ou audit tiers de contribuer des frais supplémentaires destinés à être affectés en plus desdits frais de protection du prix.

12. Le système selon la revendication 1, dans lequel ledit ensemble de règles prédéterminées comprend un premier pourcentage prédéterminé corrélé à un second pourcentage prédéterminé, et
dans lequel ledit premier pourcentage prédéterminé est un pourcentage appliqué audit montant de ladite offre gagnante afin de calculer lesdits frais de protection du prix, et ledit second pourcentage prédéterminé est un pourcentage appliqué à ladite différence afin de calculer ledit montant d'ajustement.

13. Le système selon la revendication 12, dans lequel au moins l'un parmi : un acheteur, ledit système par défaut, un tiers ou au moins un soumissionnaire dudit objet d'enchère avant de soumissionner sur ledit objet d'enchère, établit, sur la base desdites règles prédéterminées, ledit premier pourcentage prédéterminé ou ledit second pourcentage prédéterminé.

14. Le système selon la revendication 1, dans lequel un ou plusieurs parmi ledit premier pourcentage prédéterminé, ledit second pourcentage prédéterminé et ladite différence sont corrélés sur la base d'au moins l'une des relations suivantes :
(i) ledit premier pourcentage prédéterminé augmente lorsque ledit second pourcentage prédéterminé augmente ;
(ii) ledit premier pourcentage prédéterminé augmente lorsque ledit second pourcentage prédéterminé diminue ;
(iii) ledit premier pourcentage prédéterminé diminue lorsque ledit second pourcentage prédéterminé augmente ;
(iv) ledit premier pourcentage prédéterminé diminue lorsque ledit second pourcentage prédéterminé diminue ;
(v) ledit second pourcentage prédéterminé diminue lorsque ladite différence augmente ;
(vi) ledit second pourcentage prédéterminé diminue lorsque ladite différence diminue ;
(vii) ledit second pourcentage prédéterminé augmente lorsque ladite différence diminue ; ou
(viii) ledit second pourcentage prédéterminé augmente lorsque ladite différence augmente.

15. Le système selon la revendication 1, dans lequel lesdits un ou plusieurs processeurs sont en outre configurés pour :
empêcher le retrait desdites une ou plusieurs offres scellées de ladite enchère pendant une période prédéterminée précédant la clôture de ladite enchère ; ou
empêcher la soumission d'une ou plusieurs nouvelles offres scellées dans ladite enchère pendant une période prédéterminée précédant la clôture de ladite enchère.
